(19) Europäisches Patentamt / European Patent Office / Office européen des brevets

(11) **EP 4 277 151 A1**

(12) **EUROPEAN PATENT APPLICATION**
published in accordance with Art. 153(4) EPC

(43) Date of publication:
**15.11.2023 Bulletin 2023/46**

(21) Application number: **22736797.6**

(22) Date of filing: **04.01.2022**

(51) International Patent Classification (IPC):
**H04B 7/06** (2006.01)     **H04B 7/0404** (2017.01)
**H04B 17/318** (2015.01)     **H04W 52/02** (2009.01)
**H04W 52/36** (2009.01)     **H04W 52/42** (2009.01)

(52) Cooperative Patent Classification (CPC):
**H04B 7/0404; H04B 7/06; H04B 17/318;**
**H04W 52/02; H04W 52/36; H04W 52/42;**
**Y02D 30/70**

(86) International application number:
**PCT/KR2022/000049**

(87) International publication number:
**WO 2022/149820 (14.07.2022 Gazette 2022/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.01.2021 KR 20210002190**

(71) Applicant: **LG Electronics Inc.
Yeongdeungpo-gu
Seoul 07336 (KR)**

(72) Inventors:
• **CHUNG, Jaehoon
  Seoul 06772 (KR)**
• **KANG, Jiwon
  Seoul 06772 (KR)**
• **GO, Seongwon
  Seoul 06772 (KR)**
• **PARK, Haewook
  Seoul 06772 (KR)**

(74) Representative: **Plasseraud IP
66, rue de la Chaussée d'Antin
75440 Paris Cedex 09 (FR)**

(54) **METHOD AND DEVICE FOR UPLINK TRANSMISSION/RECEPTION IN WIRELESS COMMUNICATION SYSTEM**

(57)     A method and a device for uplink transmission/reception in a wireless communication system are disclosed. An uplink transmission method according to one embodiment of the present disclosure comprises the steps of: transmitting, to a base station, information related to panel switching for multi-panels; receiving, from the base station, downlink control information (DCI) for scheduling a PUSCH; and transmitting the PUSCH to the base station on the basis of the DCI. The information related to the panel switching includes information about one or more panels preferred by a terminal and information about a delay time until uplink transmission is possible by switching from a current panel to the one or more preferred panels, and the transmission timing of the PUSCH can be determined on the basis of the information about the delay time.

FIG.16

Transmit information related to panel switching — S1601
Receive DCI scheduling a PUSCH — S1602
Transmit a PUSCH — S1603

**Description**

[Technical Field]

The present disclosure relates to a wireless communication system, and in more detail, relates to a method and an apparatus of transmitting and receiving an uplink in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus of transmitting and receiving an uplink channel and/or signal for a user equipment (UE) equipped with multi-panels.

In addition, an additional technical object of the present disclosure is to provide a method and an apparatus for supporting panel switching by comprehensively considering power saving and maximum permissible exposure (MPE) mitigation of a UE equipped with multi-panels.

The technical objects to be achieved by the present disclosure are not limited to the above-described technical objects, and other technical objects which are not described herein will be clearly understood by those skilled in the pertinent art from the following description.

[Technical Solution]

A method of transmitting a physical uplink shared channel (PUSCH) in a wireless communication system according to an aspect of the present disclosure may include: transmitting, to a base station, information related to panel switching for the multi-panels; receiving, from the base station, downlink control information (DCI) for scheduling the PUSCH; and transmitting, to the base station, the PUSCH based on the DCI. the information related to panel switching may include information on one or more preferred panels by the UE and information on delay time until uplink transmission is possible by switching from a current panel to the one or more preferred panels and a transmission timing of the PUSCH may be determined based on the information on the delay time.

A method of receiving a physical uplink shared channel (PUSCH) in a wireless communication system according to an aspect of the present disclosure may include: receiving, from a user equipment (UE) equipped with multi-panels, information related to panel switching for the multi-panels; transmitting, to the UE, downlink control information (DCI) for scheduling the PUSCH; and receiving, from the UE, the PUSCH based on the DCI. The information related to panel switching may include information on one or more preferred panels by the UE and information on delay time until uplink transmission is possible by switching from a current panel to the one or more preferred panels, and a transmission timing of the PUSCH may be determined based on the information on the delay time.

[Advantageous Effects]

According to an embodiment of the present disclosure, panel switching of a UE can be effectively supported for a multi-panel UE.

In addition, according to an embodiment of the present disclosure, uplink scheduling can be performed in consideration of a delay related to panel switching, and thus, it is effective for power saving and MPE issues of the UE.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram which illustrates a downlink beam management operation in a wireless communication system to which the present disclosure may be applied.
FIG. 8 is a diagram which illustrates a downlink beam management procedure using an SSB in a wireless communication system to which the present disclosure may be applied.
FIG. 9 is a diagram which illustrates a downlink beam management operation using a CSI-RS in a wireless communication system to which the present disclosure may be applied.
FIG. 10 is a diagram which illustrates an Rx beam determination process of a terminal in a wireless communication system to which the present disclosure may be applied.
FIG. 11 is a diagram which illustrates a Tx beam determination process of a base station in a wireless communication system to which the present disclosure may be applied.
FIG. 12 is a diagram which illustrates resource allocation in a time and frequency domain related to a downlink beam management operation in a wireless communication system to which the present disclosure may be applied.
FIG. 13 is a diagram illustrating multi panel terminals in a wireless communication system to which the present disclosure may be applied.
FIG. 14 is a diagram which illustrates a beam failure recovery operation for a Pcell in a wireless communication system to which the present disclosure may be applied.
FIG. 15 is a diagram illustrating a signaling procedure between a base station and a UE for a method for transmitting and receiving an uplink signal according to an embodiment of the present disclosure.
FIG. 16 is a diagram illustrating an operation of a UE for a method for transmitting and receiving an uplink according to an embodiment of the present disclosure.
FIG. 17 is a diagram illustrating an operation of a base station for a method for transmitting and receiving an uplink according to an embodiment of the present disclosure.
FIG. 18 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211 (physical channels and modulation), TS 36.212(multiplexing and channel coding), TS 36.213(physical layer procedures), TS 36.300(overall description), TS 36.331(radio resource control) may be referred to.

For 3GPP NR, TS 38.211 (physical channels and modulation), TS 38.212(multiplexing and channel coding), TS 38.213(physical layer procedures for control), TS 38.214 (physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator

- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

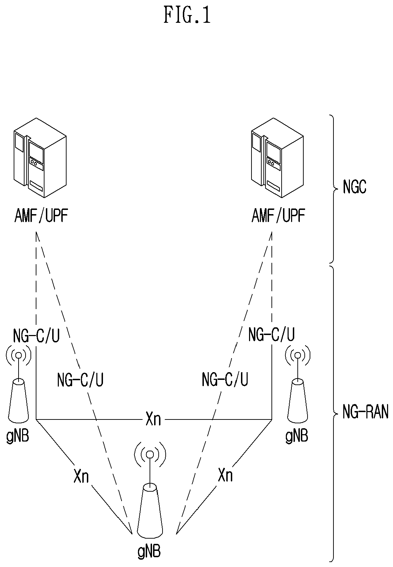

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

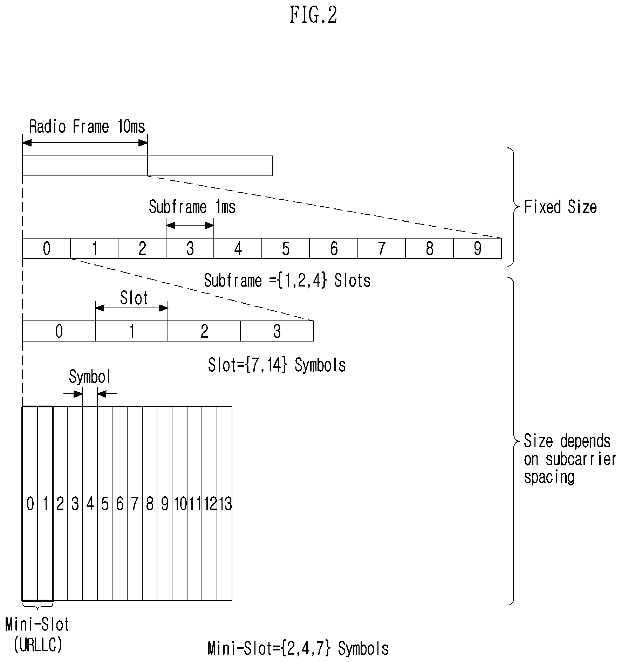

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{ma}\cdot N_f)$. Here, $\Delta f_{max}$ is 480-103 Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu} \in \{0, ..., N_{slot}^{subframe,\mu}-1\}$ in a subframe and are numbered in an increasing order of $n_{s,f}^{\mu} \in \{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |

(continued)

| μ | $N_{symb}^{slot}$ | $N_{slot}^{frame,\mu}$ | $N_{slot}^{subframe,\mu}$ |
|---|---|---|---|
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

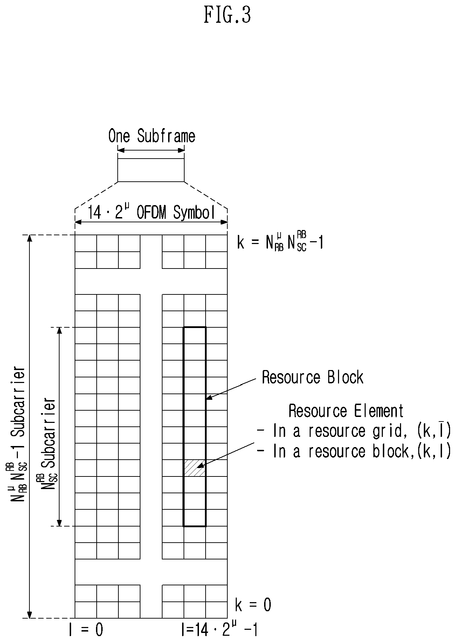

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0, ..., N_{RB}^{\mu}N_{sc}^{RB}-1$ is an index in a frequency domain and $l'=0, ..., 2^{\mu}N_{symb}^{(\mu)}-1$ refers to a position of a symbol in a subframe. When referring to a resource element in a slot, an index pair (k,l) is used. Here, $l=0,..., N_{symb}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

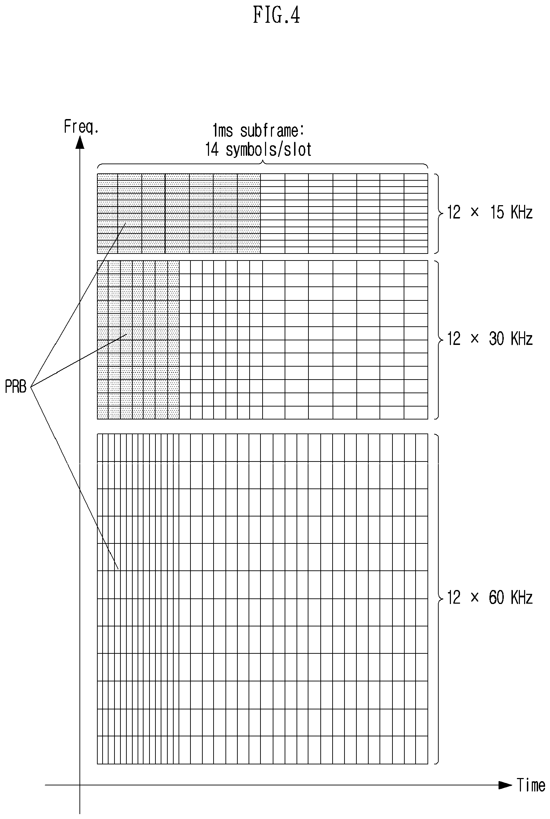

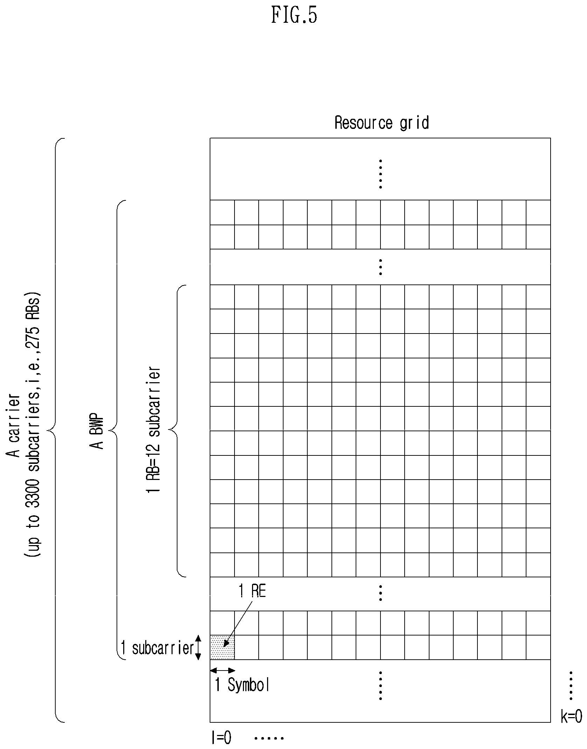

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.) . In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

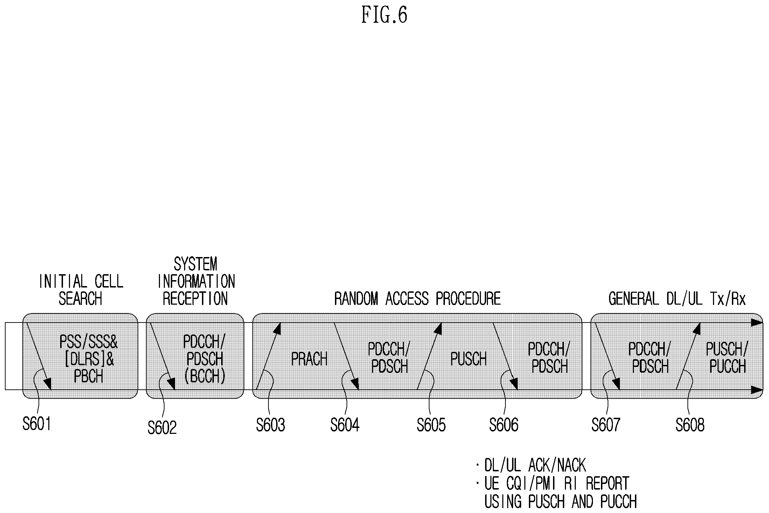

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Beam Management (BM)

As a BM procedure is L1(layer 1)/L2(layer 2) procedures for acquiring and maintaining a set of base station (e.g., gNB, TRP, etc.) and/or terminal (e.g., UE) beams which may be used to transmit/receive a downlink (DL) and an uplink (UL), it may include the following procedures and terms.

- Beam measurement: An operation that a base station or UE measures a property of a received beamforming signal
- Beam determination: An operation that a base station or UE selects its Tx beam / Rx beam
- Beam sweeping: An operation of covering a spatial domain by using a Tx and/or Rx beam during a certain time interval in a predetermined manner
- Beam report: An operation that UE reports information of a beamformed signal based on beam measurement

The BM procedure can be divided into (1) a DL BM procedure using a synchronization signal (SS)/physical broadcast channel (PBCH) block or CSI-RS, and (2) a UL BM procedure using a sounding reference signal (SRS).

In addition, each BM procedure may include Tx beam sweeping for determining a Tx Beam and Rx beam sweeping for determining a Rx beam.

Hereinafter, a DL BM procedure is described.

A DL BM procedure may include (1) transmission for beamformed DL RSs (reference signal) of a base station (e.g., a CSI-RS or a SS Block (SSB)) and (2) beam reporting of a terminal.

Here, beam reporting may include preferred DL RS ID (identifier)(s) and L1-RSRP (Reference Signal Received Power) corresponding to it.

The DL RS ID may be an SSBRI (SSB Resource Indicator) or a CRI (CSI-RS Resource Indicator).

Hereinafter, a DL BM procedure using an SSB is described.

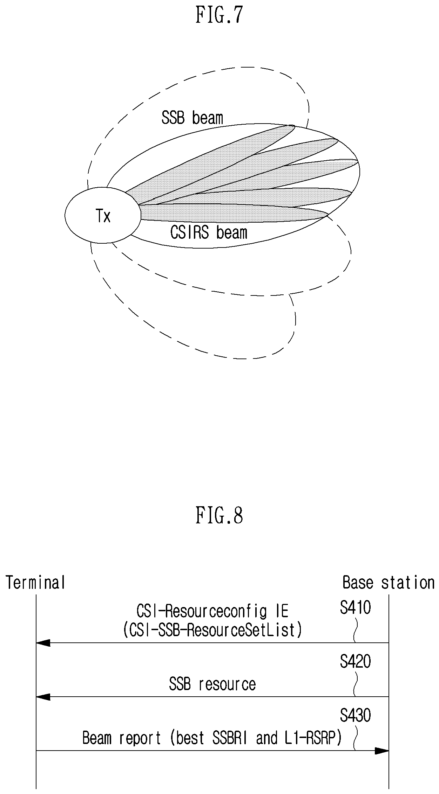

FIG. 7 is a diagram which illustrates a downlink beam management operation in a wireless communication system to which the present disclosure may be applied.

In reference to FIG. 7, an SSB beam and a CSI-RS beam may be used for beam measurement. A measurement metric is L1-RSRP per resource/block. An SSB may be used for coarse beam measurement and a CSI-RS may be used for fine beam measurement. An SSB may be used for both Tx beam sweeping and Rx beam sweeping.

Rx beam sweeping using an SSB may be performed while UE changes an Rx beam for the same SSBRI across multiple SSB bursts. Here, one SS burst includes one or more SSBs and one SS burst set includes one or more SSB bursts.

FIG. 8 is a diagram which illustrates a downlink beam management procedure using an SSB in a wireless communication system to which the present disclosure may be applied.

A configuration on beam report using an SSB is performed in a CSI/beam configuration in a RRC connected state (or a RRC connected mode).

In reference to FIG. 8, a terminal receives CSI-ResourceConfig IE including CSI-SSB-ResourceSetList including SSB resources used for BM from a base station S410.

Table 6 represents an example of CSI-ResourceConfig IE and as in Table 6, a BM configuration using an SSB configures an SSB like a CSI-RS resource without being separately defined.

【Table 6】

```
-- ASN1START
-- TAG-CSI-RESOURCECONFIG-START

CSI-ResourceConfig ::=                    SEQUENCE {
    csi-ResourceConfigId                  CSI-ResourceConfigId,
    csi-RS-ResourceSetList                CHOICE {
        nzp-CSI-RS-SSB                        SEQUENCE {
            nzp-CSI-RS-ResourceSetList            SEQUENCE (SIZE (1..maxNrofNZP-CSI-RS-
ResourceSetsPerConfig)) OF NZP-CSI-RS-ResourceSetId OPTIONAL,
            csi-SSB-ResourceSetList               SEQUENCE (SIZE (1..maxNrofCSI-SSB-
ResourceSetsPerConfig)) OF CSI-SSB-ResourceSetId    OPTIONAL
        },
        csi-IM-ResourceSetList                SEQUENCE (SIZE (1..maxNrofCSI-IM-
ResourceSetsPerConfig)) OF CSI-IM-ResourceSetId
    },

    bwp-Id                                BWP-Id,
    resourceType                          ENUMERATED { aperiodic, semiPersistent, periodic },
    ...
}

-- TAG-CSI-RESOURCECONFIGTOADDMOD-STOP


-- ASN1STOP
```

In Table 6, a csi-SSB-ResourceSetList parameter represents a list of SSB resources used for beam management and reporting in one resource set. Here, an SSB resource set may be configured as {SSBx1, SSBx2, SSBx3, SSBx4, ...}. An SSB index may be defined as 0 to 63. A terminal receives an SSB resource from the base station based on the CSI-SSB-ResourceSetList S420.

When CSI-RS reportConfig related to report on SSBRI and L1-RSRP is configured, the terminal (beam) reports the best SSBRI and L1-RSRP corresponding to it to a base station S430.

Hereinafter, a DL BM procedure using a CSI-RS is described.

When usage of a CSI-RS is described, a CSI-RS is used for beam management i) when a repetition parameter is configured for a specific CSI-RS resource set and TRS_info is not configured. ii) When a repetition parameter is not configured and TRS_info is configured, a CSI-RS is used for a TRS (tracking reference signal). iii) When a repetition parameter is not configured and TRS_info is not configured, a CSI-RS is used for CSI acquisition.

Such a repetition parameter may be configured only for CSI-RS resource sets connected with CSI-ReportConfig having report of 'No Report (or None)' or L1 RSRP.

If a terminal is configured with CSI-ReportConfig that reportQuantity is configured as 'cri-RSRP' or 'none' and CSI-ResourceConfig (a higher layer parameter resourcesForChannelMeasurement) for channel measurement includes NZP-CSI-RS-ResourceSet that a higher layer parameter 'repetition' is configured without including a higher layer parameter 'trs-Info', the terminal may be configured only with ports with the same number (1-port or 2-port) having a higher layer parameter 'nrofPorts' for all CSI-RS resources in NZP-CSI-RS-ResourceSet.

When (a higher layer parameter) repetition is configured as 'ON', it is related to a Rx beam sweeping procedure of a terminal. In this case, when a terminal is configured with NZP-CSI-RS-ResourceSet, the terminal may assume that at least one CSI-RS resource in NZP-CSI-RS-ResourceSet is transmitted to the same downlink spatial domain transmission filter. In other words, at least one CSI-RS resource in NZP-CSI-RS-ResourceSet is transmitted through the same Tx beam. Here, at least one CSI-RS resource in NZP-CSI-RS-ResourceSet may be transmitted to a different OFDM symbol. In addition, a terminal does not expect to receive a different periodicity for periodicityAndOffset in all CSI-RS resources within NZP-CSI-RS-Resourceset.

On the other hand, when repetition is configured as 'OFF', it is related to a Tx beam sweeping procedure of a base station. In this case, when repetition is configured as 'OFF', a terminal does not assume that at least one CSI-RS resource in NZP-CSI-RS-ResourceSet is transmitted to the same downlink spatial domain transmission filter. In other words, at least one CSI-RS resource in NZP-CSI-RS-ResourceSet is transmitted through a different Tx beam.

In other words, when reportQuantity of the CSI-RS reportConfig IE is configured as 'ssb-Index-RSRP', a terminal reports the best SSBRI and L1-RSRP corresponding to it to a base station.

And, when a CSI-RS resource is configured in the same OFDM symbol(s) as an SSB (an SS/PBCH Block) and 'QCL-TypeD' may be applied, the terminal may assume that a CSI-RS and an SSB are quasi co-located from a viewpoint of 'QCL-TypeD'.

Here, the QCL TypeD may mean that antenna ports are QCL-ed from a viewpoint of a spatial Rx parameter. When a terminal receives a plurality of DL antenna ports in a QCL Type D relationship, the same Rx beam may be applied. In addition, a terminal does not expect that a CSI-RS will be configured in a RE overlapped with an RE of an SSB.

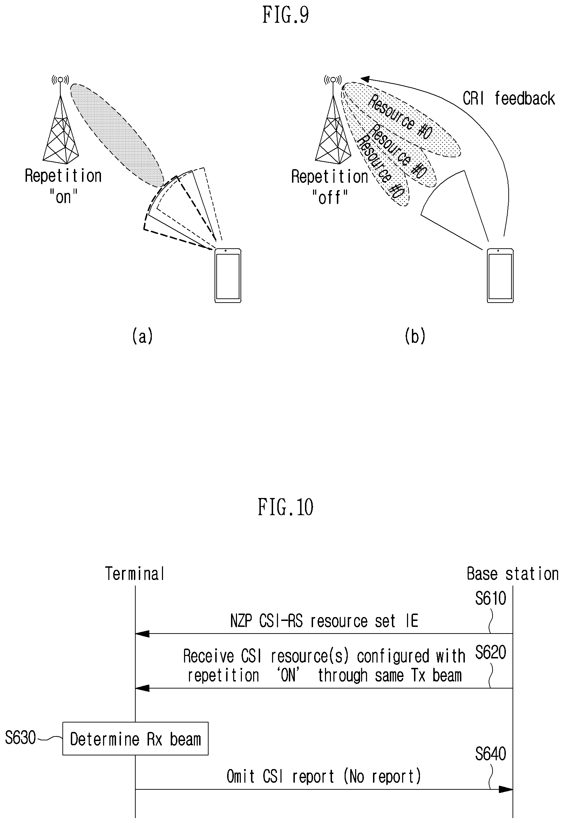

FIG. 9 is a diagram which illustrates a downlink beam management operation using a CSI-RS in a wireless communication system to which the present disclosure may be applied.

FIG. 9(a) represents a Rx beam determination (or refinement) procedure of a terminal and FIG. 9(b) represents a Tx beam sweeping procedure of a base station. In addition, FIG. 9(a) is a case in which a repetition parameter is configured as 'ON' and FIG. 9(b) is a case in which a repetition parameter is configured as 'OFF'.

FIG. 10 is a diagram which illustrates a Rx beam determination process of a terminal in a wireless communication system to which the present disclosure may be applied.

In reference to FIG. 9(a) and FIG. 10, a Rx beam determination process of a terminal is described.

A terminal receives a NZP CSI-RS resource set IE including a higher layer parameter repetition from a base station through RRC signaling S610. Here, the repetition parameter is configured as 'ON'.

A terminal repetitively receives resource(s) in a CSI-RS resource set configured as repetition 'ON' through the same Tx beam (or DL spatial domain transmission filter) of a base station in a different OFDM symbol S620.

A terminal determines its Rx beam S630.

A terminal omits CSI reporting S640. In this case, reportQuantity of a CSI reporting configuration may be configured as 'No report (or None).

In other words, the terminal may omit CSI reporting when it is configured as repetition 'ON'.

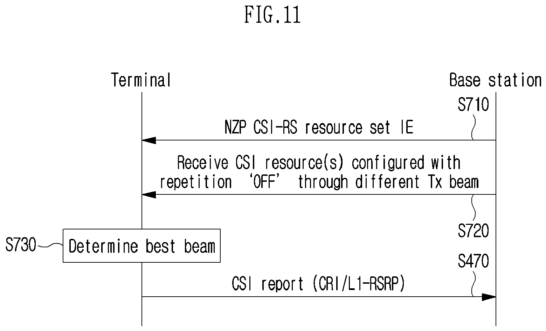

FIG. 11 is a diagram which illustrates a Tx beam determination process of a base station in a wireless communication system to which the present disclosure may be applied.

In reference to FIG. 9(b) and FIG. 11, a Tx beam determination process of a base station is described.

A terminal receives a NZP CSI-RS resource set IE including a higher layer parameter repetition from a base station through RRC signaling S710. Here, the repetition parameter is configured as 'OFF' and is related to a Tx beam sweeping procedure of a base station.

A terminal receives resource(s) in a CSI-RS resource set configured as repetition 'OFF' through a different Tx beam (DL spatial domain transmission filter) of a base station S720.

A terminal selects (or determines) the best beam S740.

A terminal reports an ID on a selected beam and relative quality information (e.g., L1-RSRP) to a base station S740. In this case, reportQuantity of a CSI reporting configuration may be configured as 'a CRI + L1-RSRP'.

In other words, when a CSI-RS is transmitted for BM, the terminal reports a CRI and L1-RSRP regarding it to a base station.

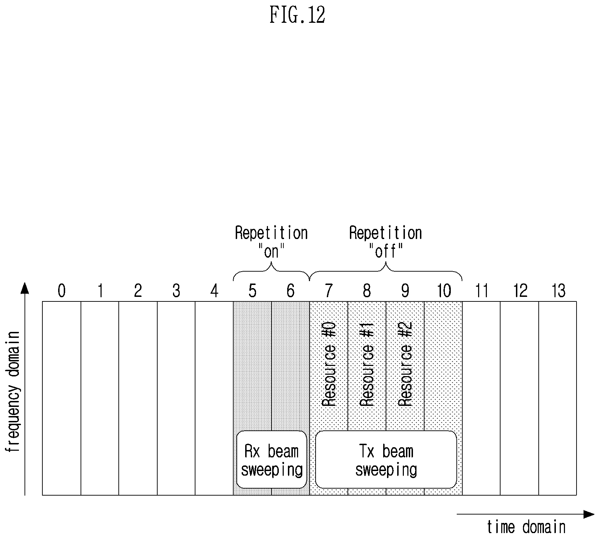

FIG. 12 is a diagram which illustrates resource allocation in a time and frequency domain related to a downlink beam management operation in a wireless communication system to which the present disclosure may be applied.

In reference to FIG. 12, it may be seen that when repetition 'ON' is configured in a CSI-RS resource set, a plurality of CSI-RS resources are repetitively used by applying the same Tx beam and when repetition 'OFF' is configured in a CSI-RS resource set, different CSI-RS resources are transmitted by a different Tx beam.

Hereinafter, a downlink BM related beam indication method is described.

A terminal may receive a RRC configuration for a list on up to M candidate transmission configuration indication (TCI) states at least for a purpose of a QCL (Quasi Co-location) indication. Here, M may be 64.

Each TCI state may be configured as one RS set. Each ID of a DL RS for a spatial QCL purpose (QCL Type D) at least in a RS set may refer to one of DL RS types such as an SSB, a P(periodic)-CSI RS, a SP(semi-persistent)-CSI RS, an a(aperiodic)-CSI RS, etc.

An ID of DL RS(s) in a RS set used at least for a spatial QCL purpose may be initialized/updated at least through explicit signaling.

Table 7 illustrates a TCI-State information element (IE) .

A TCI-State IE is associated with a quasi co-location (QCL) type corresponding to one or two DL reference signals (RS).

【Table 7】

```
-- ASN1START
-- TAG-TCI-STATE-START

TCI-State ::=                    SEQUENCE {
  tci-StateId                       TCI-StateId,
  qcl-Type1                         QCL-Info,
  qcl-Type2                         QCL-Info
                        OPTIONAL,   -- Need R
  ...
}

QCL-Info ::=                     SEQUENCE {
  cell                              ServCellIndex
                        OPTIONAL,   -- Need R
  bwp-Id                            BWP-Id
                        OPTIONAL, -- Cond CSI-RS-Indicated
  referenceSignal                   CHOICE {
      csi-rs                            NZP-CSI-RS-ResourceId,
      ssb                               SSB-Index
  },
  qcl-Type                          ENUMERATED {typeA, typeB, typeC, typeD},
  ...
}

-- TAG-TCI-STATE-STOP

-- ASN1STOP
```

In Table 7, a bwp-Id parameter represents a DL BWP (bandwidth part) where a RS is positioned, a cell parameter represents a carrier where a RS is positioned and a referencesignal parameter represents reference antenna port(s) which become a source of a quasi co-location for corresponding target antenna port(s) or a reference signal including it. The target antenna port(s) may be a CSI-RS, a PDCCH DMRS, or a PDSCH DMRS. In an example, a corresponding TCI state ID (identifier) may be indicated to NZP CSI-RS resource configuration information to indicate QCL reference RS information for a NZP (non-zero power) CSI-RS. In another example, a TCI state ID may be indicated to each CORESET configuration to indicate QCL reference information for PDCCH DMRS antenna port(s). In another example, a TCI state ID may be indicated through DCI to indicate QCL reference information for PDSCH DMRS antenna port(s).

Multi Panel Operations

'A panel' referred to in the present disclosure may be interpreted/applied as 'a plurality of (or at least one) panels' or 'a panel group' (having a similarity/a common value from a viewpoint of a specific characteristic (e.g., timing advance (TA), a power control parameter, etc.)). Alternatively, 'a panel' referred to in the present disclosure may be interpreted/applied as 'a plurality of (or at least one) antenna ports' or 'a plurality of (or at least one) uplink resources' or 'an antenna port group' or 'an uplink resource group (or set)' (having a similarity/a common value from a viewpoint of a specific characteristic (e.g., TA, a power control parameter, etc.)). Alternatively, 'a panel' referred to in the present disclosure may be interpreted/applied as 'a plurality of (or at least one) beams' or 'at least one beam group (or set)' (having a similarity/a common value from a viewpoint of a specific characteristic (e.g., TA, a power control parameter, etc.)). Alternatively, 'a panel' referred to in the present disclosure may be defined as a unit for a terminal to configure a transmission/reception beam. For example, 'a transmission panel' may generate a plurality of candidate transmission beams in one panel, but it may be defined as a unit which may use only one beam of them in transmission at a specific time. In other words, only one transmission beam (spatial relation information RS) may be used per Tx panel to transmit a specific uplink signal/channel. In addition, 'a panel' in the present disclosure may refer to 'a plurality of (or at least one) antenna ports' or 'an antenna port group' or 'an uplink resource group (or set)' with common/similar uplink synchronization and may be interpreted/applied as an expression which is generalized as 'an uplink synchronization unit (USU)'. In addition, 'a panel' in the present disclosure may be interpreted/applied as an expression which is generalized as 'an uplink transmission entity (UTE)'.

In addition, the 'uplink resource (or resource group)' may be interpreted/applied as a PUSCH/PUCCH/SRS/PRACH resource (or resource group (or set)). In addition, the interpretation/application may be interpreted/applied conversely. In addition, 'an antenna (or an antenna port)' may represent a physical or logical antenna (or antenna port) in the present disclosure.

In other words, 'a panel' referred to in the present disclosure may be variously interpreted as 'a terminal antenna element group', 'a terminal antenna port group', 'a terminal logical antenna group', etc. In addition, for which physical/logical antennas or antenna ports will be combined and mapped to one panel, a variety of schemes may be considered by considering a position/a distance/a correlation between antennas, a RF configuration, and/or an antenna (port) virtualization scheme, etc. Such a mapping process may be changed according to terminal implementation. In addition, 'a panel' referred to in the present disclosure may be interpreted/applied as 'a plurality of panels' or 'a panel group' (having a similarity from a viewpoint of a specific characteristic).

Hereinafter, multi-panel structures will be described.

Terminal modeling which installs a plurality of panels (e.g., configured with one or a plurality of antennas) in terminal implementation in a high-frequency band (e.g., bidirectional two panels in 3GPP UE antenna modeling). A variety of forms may be considered in implementing a plurality of panels of such a terminal. Contents described below are described based on a terminal which supports a plurality of panels, but they may be extended and applied to a base station (e.g., a TRP) which supports a plurality of panels. The after-described contents related to multi-panel structures may be applied to transmission and reception of a signal and/or a channel considering multi panels described in the present disclosure.

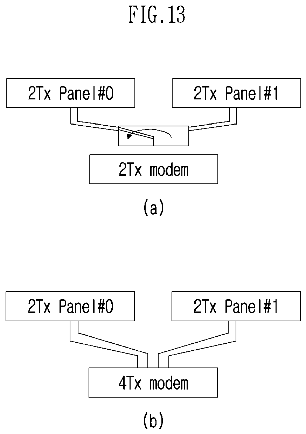

FIG. 13 is a diagram illustrating multi panel terminals in a wireless communication system to which the present disclosure may be applied.

FIG. 13(a) illustrates implementation of RF (radio frequency) switch-based multi panel terminals and FIG. 13(b) illustrates implementation of RF connection-based multi panel terminals.

For example, it may be implemented based on a RF switch as in FIG. 13 (a). In this case, only one panel is activated for a moment and it may be impossible to transmit a signal for a certain duration of time to change an activated panel (i.e., panel switching).

For implementation of a plurality of panels in a different way, a RF chain may be connected respectively so that each panel can be activated anytime as in FIG. 13(b). In this case, time for panel switching may be 0 or too little. And, it may be possible to simultaneously transmit a signal by activating a plurality of panels at the same time (STxMP: simultaneous transmission across multi-panel) according to a model and power amplifier configuration.

For a terminal having a plurality of panels, a radio channel state may be different per panel, and in addition, a RF/antenna configuration may be different per panel, so a method in which a channel is estimated per panel is needed. In particular, a process in which one or a plurality of SRS resources are transmitted respectively per panel is needed to measure uplink quality or manage an uplink beam, or to measure downlink quality per panel or manage a downlink beam by utilizing channel reciprocity. Here, a plurality of SRS resources may be SRS resources which are transmitted by a different beam in one panel or may be SRS resources which are repeatedly transmitted by the same beam. Hereinafter, for convenience, a set of SRS resources transmitted in the same panel (a specific usage parameter (e.g., beam management, antenna switching, a codebook-based PUSCH, a non-codebook based PUSCH) and a specific time domain behavior (e.g., aperiodic, semi-persistent, or periodic)) may be referred to as an SRS resource group. For this SRS resource group, an SRS resource set configuration supported in a Rel-15 NR system may be utilized as it is or it may be configured separately by bundling one or a plurality of SRS resources (having the same time domain behavior and usage).

For reference, only when usage is beam management for the same usage and time domain behavior in Rel-15, a plurality of SRS resource sets may be configured. In addition, it is defined so that simultaneous transmission cannot be performed between SRS resources configured in the same SRS resource set, but simultaneous transmission can be performed between SRS resources belonging to a different SRS resource set. Accordingly, if panel implementation and simultaneous transmission of a plurality of panels as in FIG. 13(b) are considered, a corresponding concept (an SRS resource set) itself may be matched to an SRS resource group. But, an SRS resource group may be separately defined if even implementation (panel switching) as in FIG. 113(a) is considered. In an example, a configuration may be given by giving a specific ID to each SRS resource so that resources with the same ID belong to the same SRS resource group and resources with a different ID belong to a different resource group.

For example, it is assumed that 4 SRS resource sets configured for BM usage (RRC parameter usage is configured as 'BeamManagement') are configured to a UE. Hereinafter, for convenience, each is referred to as SRS resource set A, B, C, D. In addition, a situation is considered which applies implementation performing SRS transmission by corresponding each of the sets to one (Tx) panel because UE implements a total of 4 (Tx) Panels.

[Table 8]

| The maximum number of SRS resource sets across all time domain behaviors (periodic/semi-persistent/aperiodic) reported in 2-30 | Additional limit to the maximum number of the maximum SRS resource sets per supported time domain behavior (periodic/semi-persistent/aperiodic) |
|---|---|
| 1 | 1 |
| 2 | 1 |
| 3 | 1 |
| 4 | 2 |
| 5 | 2 |
| 6 | 2 |
| 7 | 4 |
| 8 | 4 |

In Rel-15 standards, such UE implementation is more clearly supported by the following agreement. In other words, for a UE which performs capability reporting for a value reported in feature group (FG) 2-30 as 7 or 8 in Table 8, a total of up to 4 SRS resource sets for BM (per supported time domain behavior) may be configured as in the right column of Table 6. As above, implementation which performs transmission by corresponding one UE panel to each set may be applied. Here, when 4 panel UE corresponds each panel to one SRS resource set for BM and transmits it, the number itself of configurable SRS resources per each set is also supported by separate UE capability signaling. For example, it is assumed that 2 SRS resources are configured in the each set. It may correspond to 'the number of UL beams' which may be transmitted per panel. In other words, the UE may respectively correspond 2 UL beams to 2 configured SRS resources per each panel and transmit them when 4 panels are implemented. In this situation, according to Rel-15 standards, one of a codebook(CB)-based UL or non-codebook(NCB)-based UL mode may be configured for final UL PUSCH transmission scheduling. In any case, only one SRS resource set (having usage set as "CB-based UL" or "NCB-based UL") configuration, i.e., only one dedicated SRS resource set (for a PUSCH) configuration, is supported in Rel-15 standards.

Hereinafter, multi panel UE (MPUE) categories will be described.

Regarding the above-described multi panel operations, the following 3 MPUE categories may be considered. Specifically, 3 MPUE categories may be classified according to i) whether multiple panels may be activated and/or ii) transmission using multiple panels may be possible.

i) MPUE category 1: In a terminal that multiple panels are implemented, only one panel may be activated at a time. A delay for panel switching/activation may be configured as [X]ms. In an example, the delay may be configured to be longer than a delay for beam switching/activation and may be configured in a unit of a symbol or in a unit of a slot. MPUE category 1 may correspond to MPUE-assumption1 described in standardization-related documents (e.g., a 3gpp agreement, a technical report(TR) document and/or a technical specification(TS) document, etc.).

ii) MPUE category 2: In a terminal that multiple panels are implemented, multiple panels may be activated at a time. One or more panels may be used for transmission. In other words, simultaneous transmission using panels may be performed in a corresponding category. MPUE category 2 may correspond to MPUE-assumption2 described in standardization-related documents (e.g., a 3gpp agreement, a TR document and/or a TS document, etc.).

iii) MPUE category 3: In a terminal that multiple panels are implemented, multiple panels may be activated at a time, but only one panel may be used for transmission. MPUE category 3 may correspond to MPUE-assumption3 described in standardization-related documents (e.g., a 3gpp agreement, a TR document and/or a TS document, etc.).

Regarding multi panel-based signal and/or channel transmission and reception suggested in the present disclosure, at least one of the above-described 3 MPUE categories may be supported. In an example, in Rel-16, MPUE category 3 of the following 3 MPUE categories may be (selectively) supported.

In addition, information on a MPUE category may be predefined in specifications (i.e., standards). Alternatively, information on a MPUE category may be configured semi-statically and/or may be indicated dynamically according to a system situation (i.e., a network aspect, a terminal aspect). In this case, a configuration/an indication, etc. related to multi panel-based signal and/or channel transmission and reception may be configured/indicated by considering a MPUE category.

Hereinafter, a configuration/an indication related to panel-specific transmission/reception will be described.

Regarding a multi panel-based operation, signal and/or channel transmission and reception may be performed in a panel-specific way. Here, being panel-specific may mean that signal and/or channel transmission and reception in a unit of a panel may be performed. Panel-specific transmission and reception may be referred to as panel-selective transmission and reception.

Regarding panel-specific transmission and reception in a multi panel-based operation suggested in the present disclosure, a method of using identification information (e.g., an identifier(ID), an indicator, etc.) for configuring and/or indicating a panel which will be used for transmission and reception among one or more panels may be considered.

In an example, an ID for a panel may be used for panel-selective transmission of a PUSCH, a PUCCH, an SRS, and/or a PRACH among activated multiple panels. The ID may be configured/defined based on at least any one of the following 4 methods (options (Alts) 1, 2, 3, 4).

i) Alt.1 : An ID for a panel may be an SRS resource set ID.
In an example, it may be desirable to correspond each UE Tx panel to an SRS resource set configured in terms of terminal implementation when considering a) an aspect that SRS resources of multiple SRS resource sets having the same time domain behavior are simultaneously transmitted in the same BWP, b) an aspect that a power control parameter is configured in a unit of an SRS resource set, c) an aspect that a terminal may report up to 4 SRS resource sets (they may correspond to up to 4 panels) according to a supported time domain behavior. In addition, an Alt.1 scheme has an advantage that an SRS resource set related to each panel may be used for 'codebook' and 'non-codebook'-based PUSCH transmission. In addition, for an Alt.1 scheme, multiple SRS resources belonging to multiple SRS resource sets may be selected by extending an SRI (SRS resource indicator) field of DCI. In addition, a mapping table of an SRI to SRS resource may need to be extended to include SRS resources in the whole SRS resource set.

ii) Alt.2 : An ID for a panel may be an ID which is (directly) associated with a reference RS resource and/or a reference RS resource set.

ii) Alt.3 : An ID for a panel may be an ID which is directly associated with a target RS resource (a reference RS resource) and/or a reference RS resource set.

An Alt.3 scheme has an advantage that configured SRS resource set(s) corresponding to one UE Tx panel may be controlled more easily and that the same panel identifier may be allocated to multiple SRS resource sets having a different time domain behavior.

iv) Alt.4 : An ID for a panel may be an ID which is additionally configured to spatial relation information (e.g., RRC_ SpatialRelationInfo).

An Alt.4 scheme may be a scheme which newly adds information for representing an ID for a panel. In this case, it has an advantage that configured SRS resource sets corresponding to one UE Tx panel may be controlled more easily and that the same panel identifier may be allocated to multiple SRS resource sets having a different time domain behavior.

In an example, a method of introducing an UL TCI similarly to the existing DL TCI (Transmission Configuration Indication) may be considered. Specifically, definition of a UL TCI state may include a list of reference RS resources (e.g., an SRS, a CSI-RS and/or an SSB). A current SRI field may be reused to select a UL TCI state from a configured set or a new DCI field of DCI format 0_1 (e.g., a UL-TCI field) may be defined for a corresponding purpose.

Information related to the above-described panel-specific transmission and reception (e.g., a panel ID, etc.) may be transmitted by higher layer signaling (e.g., a RRC message, MAC-CE, etc.) and/or lower layer signaling (e.g., layer1 (L1: Layer1) signaling, DCI, etc.). Corresponding information may be transmitted from a base station to a terminal or may be transmitted from a terminal to a base station according to a situation or if necessary.

In addition, corresponding information may be configured by a hierarchical method which configures a set for a candidate group and indicates specific information.

In addition, the above-described identification information related to a panel may be configured in a unit of a single panel or in a unit of multiple panels (e.g., a panel group, a panel set).

Beam Failure Recovery

In performing a DL/UL beam management process, a beam mismatch problem may occur according to a configured beam management cycle. In particular, when a terminal moves or revolves or when a wireless channel environment is changed by the movement of a surrounding object (e.g., a beam is blocked to change a LoS (line-of sight) environment into a Non-LoS environment), the optimum DL/UL beam pair may be changed. Due to such a change, when tracking fails in a beam management process generally performed by a network indication, a beam failure event may be considered to occur. Whether such a beam failure event occurs may be determined by a terminal through reception quality of a downlink reference signal (RS). And, a reporting message for such a situation or a message for a beam recovery request (referred to as a BFRQ (beam failure recovery request) message) should be transmitted from a terminal. A base station which received such a beam failure recovery request message may perform beam recovery through a variety of processes such as beam RS transmission, beam reporting request, etc. for beam recovery. These series of beam recovery processes are referred to as beam failure recovery (BFR). A Rel-15 NR standardized a BFR (beam failure recovery) process for a primary cell (PCell) or a primary secondary cell (PScell) (the two are collectively referred to as a special cell (SpCell)) that a contention based PRACH resource always exists. As an operation in a serving cell, a corresponding BFR procedure is configured as follows with a beam failure detection (BFD) process of a terminal, a BFRQ process, and a process in which a terminal monitors a response of a base station to a BFRQ.

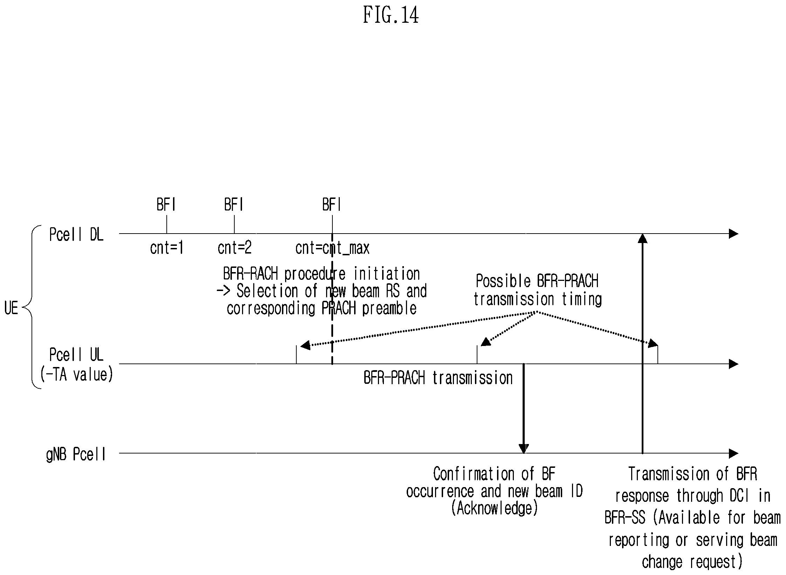

FIG. 14 is a diagram which illustrates a beam failure recovery operation for a Pcell in a wireless communication system to which the present disclosure may be applied.
Hereinafter, in reference to FIG. 14, a beam failure recovery operation is described.

1) BFD (Beam failure detection)

When all PDCCH beams fall below a predetermined quality value (Q_out), it is said that one beam failure instance occurred. Here, quality is based on a hypothetical block error rate (BLER). In other words, it means a probability of a failure in demodulation of corresponding information when it is assumed that control information was transmitted to a corresponding PDCCH.
Here, one or a plurality of search spaces for monitoring a PDCCH may be configured to a terminal. Here, a beam may be differently configured per each search space. In this case, it means a case that all PDCCH beams for all search spaces fall below a BLER threshold. As a method for a terminal to determine a BFD RS, the following two methods are supported.
An implicit configuration for BFD RS(s): a CORESET (control resource set) ID (identifier), a resource region where a PDCCH may be transmitted, is configured in each search space. And, QCLed (Quasi Co-located) RS information for a spatial RX parameter (e.g., a CSI-RS resource ID, a SSB ID) may be indicated/configured per each CORESET ID. For example, a QCLed RS is indicated/configured by a TCI (transmit configuration information) indication in a NR standard. Here, a QCLed RS for a spatial RX parameter (e.g., QCL type D in TS38.214) means that a base station informs that a terminal equally uses (or may use) a beam used to receive a corresponding spatially QCLed RS (i.e., use the same spatial domain filter for reception) in receiving a corresponding PDCCH DMRS. Finally, from a viewpoint of a base station, it is a method of informing a terminal that transmission will be performed by applying the same transmission beam or a similar transmission beam (e.g., when a beam direction is same/similar, but a beam width is different) between spatially QCLed antenna ports. In other words, as described above, a terminal may determine (i.e., consider as the 'all PDCCH beams') as a BFD RS a QCLed (Quasi Co-located) RS for a spatial RX parameter configured to a CORESET for PDCCH reception.
An explicit configuration for BFD RS(s): a base station may explicitly configure beam RS(s) to a terminal for the purpose (beam failure detection). In this case, corresponding configured beam RS(s) correspond to the 'all PDCCH beams' .
Whenever an event occurs that a hypothetical BLER measured based on BFD RS(s) deteriorates over a specific threshold, a physical layer of a terminal informs a MAC sublayer that a beam failure instance (BFI) occurred. In a MAC sublayer of a terminal, when as many BFIs as the certain number of times (e.g., a value of a higher layer parameter, beamFailureInstanceMaxCount) occur within a certain time (i.e., within a BFD timer), a beam failure is determined (considered) to occur and a relevant RACH operation is initiated.
A MAC object operates as follows:

1> If a BFI is received from a lower layer (e.g., a physical layer):

2> Start or restart a BFD timer (beamFailureDetectionTimer);
2> Increase (increment) a BFI counter (BFI_COUNTER) by 1;
2> If a BFI counter (BFI_COUNTER) is equal to or greater than the maximum count (number of times) of BFIs (beamFailureInstanceMaxCount):

   3> Initiate a Random Access procedure in a SpCell (refer to the above-described Random Access related procedure).

1> If a BFD timer (beamFailureDetectionTimer) is expired; or
1> If a BFD timer (beamFailureDetectionTimer), the maximum count (number of times) of BFIs (beamFailureInstanceMaxCount), or any reference signals used for beam failure detection is reconfigured by a higher layer (e.g., a RRC layer):
2> Set a BFI counter (BFI_COUNTER) as 0.
1> If a Random Access procedure is successfully completed:

   2> Set a BFI counter (BFI_COUNTER) as 0;
   2> If configured, stop a beam failure recovery timer (beamFailureRecoveryTimer);
   2> Consider that a Beam Failure Recovery procedure was successfully completed

2) (PRACH based) Beam Failure Recovery Request (BFRQ): New Beam Identification + PRACH Transmission

As described in 1) Beam Failure Detection (BFD), when a certain number of BFIs or more occur, a terminal may determine that a beam failure occurred and perform a beam failure recovery operation. As an example of a Beam failure recovery operation, a beam failure recovery request (BFRQ) operation based on a RACH procedure (i.e., a PRACH) may be performed. Hereinafter, a corresponding BFRQ procedure is described in detail.

A base station may configure a RS list (e.g., candidateBeamRSList) corresponding to candidate beams which may be substituted when a beam failure (BF) occurs through higher layer signaling (e.g., RRC) for a corresponding terminal. In addition, dedicated PRACH resources may be configured for corresponding candidate beams. Here, dedicated PRACH resources are non-contention based PRACH (also referred to as contention free PRACH) resources. If a terminal does not find a (proper) beam in a corresponding list, a terminal selects a contention based PRACH among preconfigured SSB resources and transmits it to a base station. A specific procedure is as follows.

Step 1) A terminal finds a beam with more than a predetermined quality value (Q_in) among RSs configured by a base station as a candidate beam RS set.

- If one beam RS exceeds a threshold, a terminal selects a corresponding beam RS.
- If a plurality of beam RSs exceeds a threshold, a terminal selects any one of corresponding beam RSs.
- If no beam exceeds a threshold, a terminal performs the following step 2.

Here, beam quality may be based on a RSRP.

In addition, a RS beam set configured by the base station may include the following three cases. For example, all beam RSs in a RS beam set may be configured with SSBs. Alternatively, all beam RSs in a RS beam set may be configured with CSI-RS resources. Alternatively, beam RSs in a RS beam set may be configured with SSBs and CSI-RS resources.

Step 2) A terminal finds a beam with more than a predetermined quality value (Q_in) or more among SSBs (associated with a contention based PRACH resource).

- If one SSB exceeds a threshold, a terminal selects a corresponding beam RS.
- If a plurality of SSBs exceeds a threshold, a terminal selects any one of corresponding beam RSs.
- If no beam exceeds a threshold, a terminal performs the following step 3.

Step 3) A terminal selects any SSB among SSBs (associated with a contention based PRACH resource).

A terminal transmits to a base station a preamble and a PRACH resource which is directly or indirectly associated and configured with a beam RS (CSI-RS or SSB) selected in the process.

- Here, a direct association configuration is used in the following case.

When a contention-free PRACH resource and a preamble are configured for a specific RS in a candidate beam RS set which is separately configured for BFR

When a preamble and a (contention based) PRACH resource mapped one-to-one with SSBs which are commonly configured for other purposes such as random access, etc. are configured

- Alternatively, here, an indirect association configuration is used in the following case.

When a contention-free PRACH resource and a preamble are not configured for a specific CSI-RS in a candidate beam RS set which is separately configured for BFR

Here, a terminal selects a preamble and a (contention free) PRACH resource associated with a SSB (i.e., QCLed (quasi-co-located) with respect to a spatial Rx parameter) designated to be receivable with the same Rx beam as a corresponding CSI-RS.

3) Monitoring of a response of a base station to a BFRQ

- A terminal monitors a response of a base station (gNB) to corresponding PRACH transmission.

Here, a response to the contention-free PRACH resource and preamble is transmitted to a PDCCH masked by a C-RNTI and a response is received in a search space (SS) which is separately configured by RRC for BFR.
Here, the search space is configured for a specific CORESET (for BFR).
For a response to a Contention PRACH, a search space and a CORESET (e.g., CORESET 0 or CORESET 1) configured for a general contention PRACH based random access process are reused as they are.

- If there is no response for a certain period of time, 2) a process of identifying and selecting a new beam, and 3) a process of monitoring a response of a base station and a BFRQ are repeated.

The process may be performed until PRACH transmission reaches the preconfigured maximum number of times (N_max) or a configured timer (BFR timer) expires.
If the timer expires, a terminal stops contention free PRACH transmission, but may perform contention based PRACH transmission by a SSB selection until N_max is reached.

Enhanced Beam Failure Recovery (Rel-16)

As described above, Rel-15 NR standardized a PRACH based BFR process. However, it is applied only to a PCell or a PSCell due to a technical limit that any SCell may have no UL carrier in CA (carrier aggregation) and although there is a UL carrier, a contention based PRACH may not be configured. Such a limit has a limit that especially, when a SCell is operated in a high frequency band (e.g., 30GHz) while operating a PCell in a low frequency band (e.g., below 6GHz), BFR may not be supported in a high frequency band where BFR is actually needed. For this reason, standardization for BFR support on a SCell is performed in a Rel-16 NR MIMO work item. It is specified to configure (dedicated) PUCCH resource(s) in SpCell for a beam failure recovery request (BFRQ) of a UE and perform a BFRQ for an SCell using this. Hereinafter, for convenience, the PUCCH is referred to as a BFR-PUCCH.
As described above, a role of a BFR-PRACH standardized in Rel-15 is to transmit 'beam failure occurrence + new beam RS (set) information' together to a base station. Meanwhile, a role of a BFR-PUCCH is to inform only 'beam failure for SCell(s) ' . And, which SCell(s) has beam failure (e.g., CC index(es)), whether a new beam exists for the corresponding SCell(s), and if a new beam exists, the corresponding beam RS identifier (ID) (e.g., CSI-RS resource ID, SSB resource ID) may be reported through a MAC-CE (or UCI) for a subsequent BFR. The corresponding BFR-PUCCH uses the same PUCCH format as SR (scheduling request) and may be defined by assigning a specific SR ID for BFR purposes. If there is a UL-SCH pre-allocated from a base station when a UE detects beam failure for an SCell, similar to an SR procedure, a BFR-PUCCH transmission procedure may be omitted and a BFR MAC-CE may be directly transmitted through a pre-allocated UL-SCH.

Uplink transmission and reception method

In order to standardize an operation for fast UL panel selection of a multi-panel UE (MP-UE), it was agreed to carry out a design considering a total of 5 use cases as follows.
In Rel-17 enhancements to facilitate fast UL panel selection, the following use cases are assumed:

- maximal permissible exposure (MPE) mitigation
- UE power saving
- UL interference management
- Support different configurations across panels
- UL mTRP (multi-TRP)

In the current Rel-17 NR FeMIMO, an introduction of a DL/UL integrated framework is considered as follows, and standardization for an operation of a multi-panel UE to reduce UL coverage loss due to maximum permissible exposure (MPE) is in progress.

1. Enhancement on multi-beam operation, mainly targeting FR2 while also applicable to FR1:

a. Identify and specify features to facilitate more efficient (lower latency and overhead) DL/UL beam management to support higher intra- and L1/L2-centric inter-cell mobility and/or a larger number of configured TCI states:

i. Common beam for data and control transmission/reception for DL and UL, especially for intra-band CA
ii. Unified TCI framework for DL and UL beam indication
iii. Enhancement on signaling mechanisms for the above features to improve latency and efficiency with more usage of dynamic control signaling (as opposed to RRC)

b. Identify and specify features to facilitate UL beam selection for UEs equipped with multiple panels, considering UL coverage loss mitigation due to MPE, based on UL beam indication with the unified TCI framework for UL fast panel selection

In an existing Rel-16 NR, considering an MPE limitation that can be harmful to a human body by analog beams in a FR2 environment, a method for avoiding when a transmission beam of a UE exceeds the corresponding MPE limitation has been standardized in RAN4, and the corresponding MPE avoidance technology is as follows.
The NR UE at FR2 can be satisfy the MPE regulatory requirements as follow three options.

Option1) Apply 6 dB P-MPR only without maxUplinkDutyCycle restrictions
Option2) Apply 20% maxUplinkDutyCycle only without P-MPR
Option3) Apply both P-MPR and maxUplinkDutyCycle

Table 9 below is a table summarizing the advantages and disadvantages of each of the above options.

[Table 9]

| Solution | Pros | Cons |
|---|---|---|
| Option 1 | - TDD UL/DL configuration is not restricted<br><br>-arly released 5G UE easily satisfied the MPE | - Shrink the cell coverage<br>- Initial access is restricted area<br><br>- RAN2 signalling is not support P-MPR reporting from UE |
| Option 2 | - Maintain the cell coverage<br>- Initial access is not restricted area<br>- RAN2 signalling is support maxUplinkDutyCy cle reporting from UE<br>- Early released 5G UE easily satisfied the MPE | - TDD UL/DL configuration is restricted |
| Option 3 | - Simple to satisfy MPE | - RAN2 signalling is not support P-MPR reporting from UE<br>- Early released UE do not provide any informations to NW for both P-MPR & maxUplinkDutyCycle |

The first method is a method of directly backoffing a transmit power of a UE based on P-MPR (power management-maximum power reduction), and an MPE limitation can be met according to this method. As another method, maxUplinkDutyCycle is defined/used to limit a UL portion from a time domain perspective to lower a UL transmission density, and an MPE limitation can be met according to this method. In addition, regarding UE power saving, when a multi-panel UE continuously activates and operates all available UL panels, loss may occur in terms of power consumption of the UE, so it can be applied as a solution to this. For example, power consumption of a UE may be reduced by deactivating a specific panel (s) that is not used for UL transmission or has a poor channel environment for a specific time.
When designing a solution by considering each of the two use cases (i.e., MPE mitigation and UE power saving) in the above-described an MP-UE, in addition to problems of overhead and complexity increase through each signaling, a large problem may occur in an operation of a UE. For example, in a case of a UE with a total of 3 UL panels (panel#1, panel#2, panel#3) as shown in Table 10 below, panel#2 and panel#3 are deactivated due to UE power saving, and only panel#1 can assume an activation status. In this case, when an MPE issue occurs in panel#1, for UL transmission scheduled by a base station, since a UE performs UL transmission by applying a power backoff or a UL duty cycle, which is an existing operation method, performance deterioration for UL throughput and coverage cannot be addressed.

Table 10 illustrates a preferred panel switching operation of a multi-panel UE considering MPE/UE power saving.

[Table 10]

| #1 | #2 | #3 | 3-panel UE case |
|---|---|---|---|
| O | O | O | All UL panels are activated |
| O | X | X | panel#2, panel #3 are deactivated for power saving |
| ? | X | X | MPE issue on panel#1 or not<br>- An operation to inform a preferred panel by a corresponding panel is required.<br>Here, it is necessary to define an operation when the number of activated panels is plural.<br>- An operation to inform a preferred panel of a delay (i.e., time interval) when UL transmission is possible is required<br>For example, panel activation delay, panel switching timing/gap, etc.<br>- It is required to indicate whether the reason for a panel switching is MPE.<br>That is, during the delay, whether or not a current panel (i.e., panel #1) is usable can be informed. |

In addition, in order to solve the above problem, it is necessary to change (preferred) panel(s) to be used in UL. However, a delay (i.e., time duration) required until UL transmission is possible and an operation related to UL transmission may be different depending on an indication of a corresponding panel(s) and whether or not a corresponding panel is activated. That is, depending on whether a preferred panel is activated, considering a delay required for activation of a panel and a delay required for switching to a corresponding panel, etc., this means that information on a minimum time for switching to a corresponding panel can be different for each state when a UE's panel is changed. Therefore, in the present disclosure, considering MPE mitigation and UE power saving integrally, when or before a problem occurs for UL transmission in a current serving panel (or current panel) of a UE, a reporting method and reporting information for a UE related thereto are proposed.

Embodiment #1: During or before panel switching considering MPE / power saving, etc. or regardless of panel switching (e.g., periodically / semi-statically), depending on whether preferred panel(s) is activated, a UE can report (minimum) delay-related information for switching to the corresponding panel(s) (i.e., UL transmission is possible with the corresponding panel(s)) to a base station.

The corresponding delay-related information may be generated based on whether preferred panel(s) are activated and/or by status according to panel switching. Here, the 'delay value (e.g., the number of slots/symbols)' itself according to the condition may be configured/reported, or a base station may calculate the 'delay value' by reporting the 'corresponding status'.

Here, a UE may report to a base station including some/all of the following information.

- information on preferred panel(s)

Here, information on preferred panel(s) may be explicit panel information (e.g., panel identity (ID)).

Alternatively, information on preferred panel(s) may be implicit panel information (e.g., a panel ID may correspond to a PUCCH group ID, an SRS resource set ID, or a specific TCI state ID, etc. by configuration between a UE and a base station) . In this case, a UE may report a PUCCH group ID, an SRS resource set ID, or a specific TCI state ID corresponding to a panel ID to a base station, and the base station can recognize the indicated panel ID through this.

- Information on validity of a current panel (e.g., 1-bit information)

This means information on an operation configuration (e.g., whether operation is possible) of a currently activated current panel prior to UL transmission through preferred panel(s) (i.e., until panel switching to actual preferred panel(s) is completed).

In the above embodiment #1, while performing a related report when a problem related to MPE occurs in a current panel supported by a UE or for reasons such as power saving, etc. (or before a problem occurs or before a report is performed, e.g., periodically), it means to report information (i.e., delay-related information) on a minimum time (i.e., $T_{min}$) available for switching to a target panel depending on whether the corresponding panel is activated or not (e.g.,

depending on whether switching is required by activating a panel in a deactivated state or switching to a panel in an already active state), when a UE switches a panel to a preferred or target panel. Here, (minimum) delay-related information may be configured in consideration of a delay required for activation of a preferred or target panel (i.e., the time required for a transition from a deactivated state of a panel to an active state of a panel) and a delay for switching to the corresponding panel (i.e., the time required to change a panel actually used for UL/DL transmission/reception).

Here, for example, (minimum) delay-related information may be indicated/expressed as a time interval (e.g., number of slot/symbols) according to the condition (e.g., whether a preferred panel is activated). That is, delay-related information may directly indicate a time interval.

Alternatively, (minimum) delay-related information may be reported to a base station by indicating/expressing the condition (e.g., whether a preferred panel is activated) as a status. That is, delay-related information may indicate a status so that a minimum time interval (i.e., $T_{min}$) can be calculated by a base station. In this case, a base station may calculate a minimum time available for switching (to a preferred panel) based on the corresponding status. Details on $T_{min}$ and related status in consideration of activation of the (preferred/target) panel/switching-related delay will be described later in Embodiment #1-1.

It is necessary to define a specific operation of a UE or base station reflecting 'delay related information' reported according to the method of Embodiment #1, in this regard, there are two UL-related timing parameters of a UE as follows.

- $N_2$ (PUSCH preparation time): Number of OFDM symbols required for UE processing from the end of PDCCH reception including UL grant to the earliest possible start of the corresponding PUSCH transmission from UE perspective
- $K_2$ (PUSCH slot offset): Number of slots from the slot with UL grant PDCCH to the slot with the corresponding PUSCH transmission

$T_{min}$ based on 'delay related information' reported according to the above-described proposed method may be reflected in a UL processing time of a UE. That is, a UL (e.g., PUSCH) transmission timing of a UE may be determined based on the 'delay related information'.

For example, when a base station schedules a PUSCH (e.g., transmits a DCI for scheduling a PUSCH), it may operate by guaranteeing $K_2 > N_2 + T_{min}$. That is, a base station may schedule a transmission slot of a PUSCH by DCI so that $K_2 > N_2 + T_{min}$ is guaranteed.

More specifically, if a UE is scheduled to transmit a transport block on a PUSCH by DCI, a value m of a field for time domain resource assignment of the corresponding DCI (i.e., 'Time domain resource assignment' field) provides a row index m+1 of a predetermined PUSCH resource allocation related table. Each row in a PUSCH resource allocation table defines a slot offset $K_2$, a start and length indicator (SLIV) (or directly a start symbol S and an allocation length L), a PUSCH mapping type assumed for PUSCH transmission, and a number of repetitions. When a UE receives DCI for scheduling a PUSCH in slot n, a value of $K_2$ is determined according to a row of the PUSCH resource allocation related table indicated by a value m of the 'Time domain resource assignment' field in the corresponding DCI, a slot $K_s$ allocated for a PUSCH is determined based on an index (i.e., n) of a slot in which the DCI is received and a value of K2.

Alternatively, when a base station schedules a PUSCH (e.g., when transmitting DCI for scheduling a PUSCH), a base station and a UE may operate by promising a slot offset from a PDCCH to a PUSCH as $K_2 + T_{min}$. That is, even if a base station schedules a transmission slot of a PUSCH by DCI in the same way as the existing, a transmission slot of an actual PUSCH may be determined based on $K_2 + T_{min}$ (both a base station and a UE may operate based on this promise implicitly).

Alternatively, in order to reflect a corresponding $T_{min}$ in $N_2$ itself, it may be configured by extending a range of $N_2$. For example, when a value of $N_2$ is determined according to a processing capability of a UE, the value of $N_2$ may be determined to ensure $T_{min}$. For example, a value of $N_2$ may be defined as a small value and a large value that can be used. PDCCH processing can be completed within a short time by reporting and using a small value to a base station according to a UE capability. A range of $N_2$ may be configured to be further extended. That is, a difference between $N_2$ candidates may be configured to be larger. Alternatively, for example, more $N_2$ candidates than the existing may be configured within a larger range. A UE terminal may report a value of $N_2$ to be used to a base station in consideration of $T_{min}$ according to its own capability. Alternatively, for example, a UE may be defined to operate in consideration of (in addition to) the reported $T_{min}$ to the selected $N_2$.

Eventually, as $K_2$ and/or $N_2$ are determined based on $T_{min}$ according to 'delay related information', a timing at which a UE actually transmits a PUSCH may be determined.

In addition to delay-related information, a UE may include some or all of information for identifying preferred panel(s) and/or availability (i.e., validity) of a current panel in a corresponding report.

Here, as information for identifying preferred panel(s), an explicit panel ID, etc. may be used. Alternatively, a panel ID may be expressed in correspondence with a PUCCH group ID, an SRS resource set ID, a specific TCI state ID, etc. in an implicit manner through configuration between a UE and a base station.

In addition, validity information (e.g., 1-bit indicator) means information on an operation configuration (e.g., whether an operation is possible) of a currently activated current panel prior to UL transmission through a preferred/target panel (i.e., until panel switching to an actual preferred panel(s) is completed). For example, when a current panel is available (for example, validity='1'), UL transmission may be possible through a current panel until a delay of switching to a target panel. Conversely, if a current panel is unavailable due to MPE issues (for example, validity='0'), before a delay (i.e., time interval based on delay related information) available for a preferred panel, an operation to satisfy the above-described existing MPE limitation may be performed, and after the delay (i.e., time interval based on delay related information), UL transmission may be performed with the preferred panel. As a result, performance can be improved in terms of coverage and throughput compared to an operation limited to the existing current panel. If there is another activated panel(s) other than a current panel, a panel is selected according to a specific rule (e.g., the lowest/highest panel ID, a panel corresponding to the best L1-RSRP/L1-SINR, etc.) agreed upon in advance between a base station and a UE (or a panel indicated by a base station is selected), and a UE performs UL transmission on the selected panel until the preferred panel is available for delay (i.e., time interval based on delay related information). And, after the time when a target panel becomes available (i.e., a time interval based on delay-related information), UL transmission may be performed on the corresponding panel.

Embodiment #1-1: In Embodiment #1, (minimum) delay-related information may include as follows according to information reported by a UE on whether preferred panel(s) are activated and/or on a panel switching delay.

Case 1) When information reported by a UE includes some information on whether a preferred panel is activated and a delay related to switching, delay-related information may include an indication of the delay information (e.g., a bitmap, etc.) and a specific delay value.

Case 2) When information reported by a UE includes both an activation of a preferred panel and a delay related to switching, or when a base station already knows the related information, delay-related information can be composed of 1-bit information on whether the preferred panel is activated. Here, it is possible to calculate a delay that changes depending on whether a panel is activated or not and switching only with the corresponding 1-bit information.

In the embodiment #1-1, a configuration and status of (minimum) delay related information may be different according to a degree of inclusion of information (e.g., a delay required to activate a preferred panel, a switching delay to a preferred panel, etc.) reported by a UE.

As in Case 1, in a state in which a base station does not know related information on some or all of information reported by a terminal among the delay information, minimum delay related information for a preferred panel can be configured by listing mapping bitmap information for the delay information and a specific delay value in a predetermined order pair. For example, status according to whether a preferred panel is activated or not and panel switching can be configured through a bitmap as follows {whether activated, activation delay, switching gap} = {011}. Here, the highest (or leftmost) bit of a bitmap may indicate whether a preferred penal is activated (e.g., '1': activated, '0': deactivated). In addition, the next bit of a bitmap may indicate whether a value of an activation delay to a preferred penal (i.e., a delay required for activation of a corresponding panel to the corresponding panel)) is reported (e.g., '1': activation delay value reported, '0': no activation delay value reported). In addition, the next bit of the bitmap (i.e., the least significant (or rightmost) bit) may indicate whether a switching gap value is reported (e.g., '1': a switching gap value is reported, '0': no switching gap value reported). Here, a panel switching gap means a timing offset required until switching starts from a current panel to a preferred panel.

Here, it is assumed that a base station is not reported related information on a switching delay to a corresponding panel (unless reported through periodic (P)/semi-persistent (SP)/aperiodic (AP) reporting or event-driven reporting of related information) or that related information on a switching delay is not separately reported. In this case, for example, if an activation delay = 2ms and a switching gap = 3ms, according to the bitmap configuration order, {2ms, 3ms} are listed in order, and a UE may finally report information including {011}, {2ms, 3ms} to a base station.

Alternatively, as in Case 2, a case in which entire delay-related information has already been reported (through P/SP/AP reporting or event-driven reporting or through UE capability) may be considered. For example, a UE capability may be reported by including an (same/different) activation delay for each panel and a (same/different) switching delay between panels. In this case, even if a UE reports i) explicit/implicit indication of a preferred panel and ii) 1-bit information (i.e., the delay-related information is defined as 1-bit) (e.g., '1': activated, '0': deactivated) on whether the corresponding panel is activated as status to a base station, the base station can calculate a delay or $T_{min}$ for PUSCH scheduling. For example, it is assumed that an activation delay of a UE capability is configured differently for each panel as {panel#1, panel#2, panel#3} = {2ms, 3ms, 4ms} and that, similarly, a switching delay between panels is configured differently between panels as {panel#1-#2, panel#1-#3, panel#2-#3} = {1ms, 2ms, 3ms}. In this case, if a current panel is panel#1 and a preferred panel is indicated as #3 (deactivated status) through the above Embodiment #1, a base station may activate the corresponding preferred panel only with the corresponding 1-bit status (e.g., 1-bit value for activation = '0') and may calculate that a minimum time available for UL transmission to the preferred panel by panel switching from the current panel to the preferred panel is 6ms (4ms + 2ms).

Embodiment #2: The information of proposal #1 and proposal #1-1 may be transmitted to a base station in the following manner.

Method 1) Event-based method

Through a scheduling request (SR) PUCCH/a physical random access channel (PRACH) or beam failure recovery request (BFRQ) PUCCH, when an activated status state of a panel changes, such as when an MPE issue occurs or power saving starts, etc., a corresponding report can be performed.

A UE may perform a report on the preferred panel(s) and the delay-related information (in addition, validity information of a current panel, etc.) (this can be referred to as panel switching related information) of the Embodiments #1 and #1-1 using an SR PUCCH/PRACH. For example, by using the same PUCCH format as an SR, an SR identity (ID) for reporting purposes for a preferred panel (i.e., reporting purposes for information related to panel switching) can be configured. In addition, for example, a preamble sequence index for reporting on a preferred panel may be configured using a PRACH format.

Accordingly, information on the corresponding report may be added to a PUCCH/PRACH format and/or a medium access control (MAC) control element (CE) message format for an existing SR PUCCH and reported together during transmission of the existing SR PUCCH. That is, after transmitting an SR PUCCH/PRACH for reporting panel switching related information to a base station, a UE may transmit panel switching related information (e.g., MAC CE for this purpose) to the base station based on scheduling information of the base station.

For example, a UE may transmit an SR to a base station through an SR PUCCH using an SR ID for reporting panel switching related information, and a base station may transmit DCI for PUSCH scheduling in response to the SR. A UE may transmit an MAC CE including panel switching related information to a base station through a PUSCH based on scheduling information of DCI. In addition, for example, a UE may initiate a random access procedure by transmitting a PRACH to a base station using a preamble sequence index for reporting of panel switching related information, and a base station may transmit a second message (Msg2, i.e., a random access response) in response to the PRACH. A UE may transmit a third message (Msg3) or an MAC CE including panel switching related information to a base station through a PUSCH based on scheduling information of a second message (Msg2, i.e., a random access response).

When using a PUCCH for a BFRQ of a UE, a change in an activation status of a panel may be informed. In addition, detailed (proposed) information related to this (i.e., panel switching related information) may be included in a subsequent MAC CE for BFR and reported to a base station. Here, a BFR PUCCH may use the same PUCCH format as an SR and may be defined by assigning a specific ID for a BFR purpose (i.e., for reporting panel switching related information).

Reserved resources can be used in situations such as when an MPE issue occurs or when power saving begins. For example, one of periodic CSI PUCCH resources may be configured for use of panel switching related information. In addition, the corresponding resource is used during the event, and what is described in Embodiment #1 and Embodiment #1-1 (i.e., for reporting purpose of panel switching related information) (e.g., (minimum) delay related information) may be added to a report quantity in a UE reporting operation (e.g., report quantity having (with) preferred panel(s), panel activation delay, panel switching delay, and/or status, etc.).

Method) Beam reporting method

In beam reporting (i.e., in addition to L1-RSRP or L1-SINR based DL RS reporting), a UE may report panel switching-related information (i.e., preferred panel(s) and delay related information, etc.) considering MPE/UE power saving from a UL perspective to a base station. Here, a UE may perform a 1-bit indication (e.g., '1': preferred panel, '0': not preferred panel) for a preferred panel for UL use on each of N beams (or for each panel) while performing N beam reports related to a DL best beam (per panel). Here, mapping relationships for different panels can be configured for each beam (or beam group), and preferred panel(s) can be indicated through 1-bit indications for each of N beams.

In addition, when reporting L1-RSRP/SINR of each of N beams or differential L1-RSRP/SINR values compared to the best beam, information related to a delay may be included in a beam (or panel) indicated as a preferred panel. Alternatively, a new report quantity may be additionally supported to support a UE reporting operation. For example, a separate configuration / mode (e.g., report quantity having (with) preferred panel and delay related information for UL) may be configured in a report configuration (e.g., by RRC signaling).

In addition, when beam reporting (i.e., in addition to L1-RSRP or L1-SINR based DL RS reporting), a UE may report preferred panel(s) and delay information, including power headroom (PH) and/or maximum power ($P_{cmax}$) available to the UE for each panel. A plurality of candidate values for reporting the PH / $P_{cmax}$ value of a UE may be configured in advance by a base station. For example, a base station may pre-configure a table of PH values in terms of dB, and a UE may report a PH corresponding to each panel to a base station. In addition, a base station can pre-configure a table for $P_{cmax}$ values or configure it in a bitmap format, and a UE may report $P_{cmax}$ corresponding to each panel to a base station.

Here, a base station may determine that a panel without a PH or a panel with a low $P_{cmax}$ value (e.g., when it is lower than a predetermined threshold or included in preconfigured low candidate values) has an MPE issue through a corresponding PH / $P_{cmax}$ report. Accordingly, a base station may replace a validity of a current panel with corresponding information based on this. A new report quantity may be additionally supported to support an example of a UE reporting operation. For example, a separate configuration/mode (e.g., report quantity having (with) a PHR/$P_{cmax}$ for each panel) may be added to report configuration (e.g., by RRC signaling).

In addition, a separate reporting method (or signaling) for the proposal information (i.e., panel switching related information) may be defined. For example, as a report of panel switching related information, a report defined as an RRC/MAC layer procedure or a UE capability report may be defined.

A base station can effectively respond to power saving and MPE issues of a UE based on the report information based on the above-described embodiments (i.e., Embodiments #1 and #2) of a UE. That is, when a UL transmission panel is indicated, scheduling may be performed by considering a delay related to activation of a corresponding panel and switching to a corresponding panel.

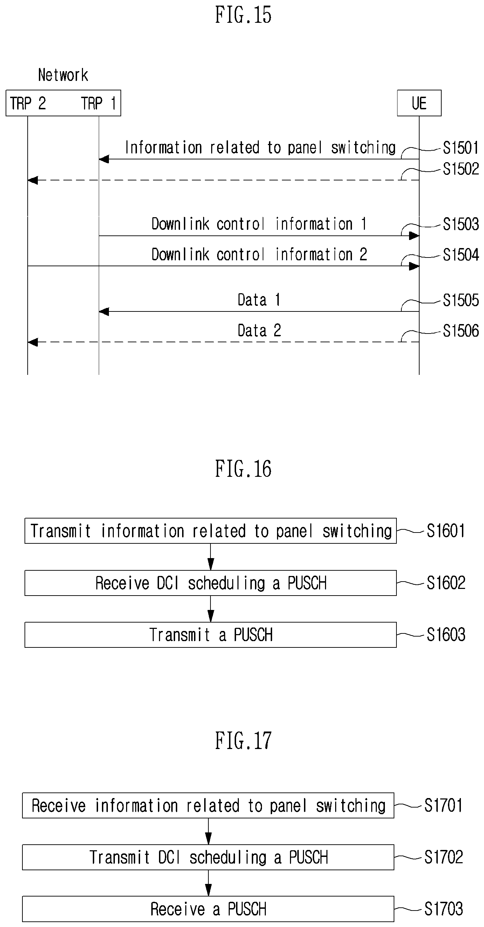

FIG. 15 is a diagram illustrating a signaling procedure between a base station and a UE for a method for transmitting and receiving an uplink signal according to an embodiment of the present disclosure.

FIG. 15 illustrates signaling between a network (e.g., TRP 1 and TRP 2) and a terminal (i.e., UE) in a situation of multiple TRPs (i.e., M-TRP, or multiple cells, hereinafter all TRPs can be replaced with cells) to which the methods (e.g., Embodiment #1 and Embodiment #2, etc.) proposed in this disclosure can be applied.

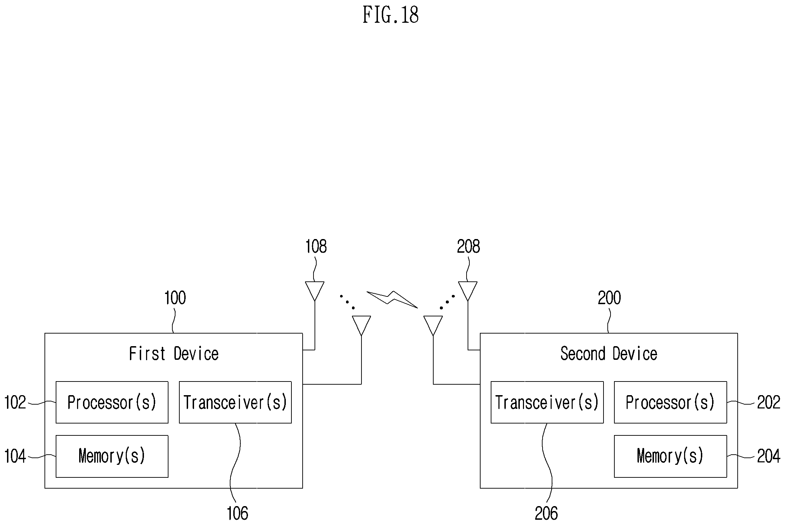

Here, a UE/a Network is just an example, and may be substituted with a variety of devices and applied as described in FIG. 18 to be described later. FIG. 15 is just for convenience of a description, and it does not limit a scope of the present disclosure. In addition, some step(s) illustrated in FIG. 15 may be omitted according to a situation and/or a configuration, etc.

In reference to FIG. 15, for convenience of a description, signaling between 2 TRPs and a UE is considered, but a corresponding signaling method may be extended and applied to signaling between a plurality of TRPs and a plurality of UEs. In the following description, a network may be one base station including a plurality of TRPs or may be one cell including a plurality of TRPs. In an example, an ideal/a non-ideal backhaul may be configured between TRP 1 and TRP 2 configuring a network. In addition, the following description is described based on a plurality of TRPs, but it may be equally extended and applied to transmission through a plurality of panels. In addition, in the present disclosure, an operation that a terminal receives a signal from TRP1/TRP2 may be interpreted/described (or may be an operation) as an operation that a terminal receives a signal from a network (through/using TRP1/2) and an operation that a terminal transmits a signal to TRP1/TRP2 may be interpreted/described (or may be an operation) as an operation that a terminal transmits a signal to a network (through/using TRP1/TRP2) or may be inversely interpreted/described.

In addition, as described above, "TRP" may be substituted with expressions such as a panel, an antenna array, and a cell (e.g., macro cell / small cell / pico cell, etc.). Expressions such as a cell (pico cell, etc.), a transmission point (TP), a base station (base station, gNB, etc.), etc. and may be applied. As described above, TRPs may be classified according to information (e.g., an index, an identifier (ID)) of a CORESET group (or CORESET pool). For example, when one UE is configured to transmit/receive with multiple TRPs (or cells), this may mean that multiple CORESET groups (or CORESET pools) are configured for one UE. A configuration of such a CORESET group (or CORESET pool) may be performed through higher layer signaling (e.g., RRC signaling, etc.). In addition, a base station may mean a generic term for an object that transmits and receives data with a UE. For example, the base station may be a concept including one or more transmission points (TPs), one or more transmission and reception points (TRPs), etc. Also, the TP and/or the TRP may include a panel of a base station, a transmission and reception unit, etc.

Specifically, FIG. 15 illustrates signaling when a UE receives multiple DCIs (e.g., when each TRP transmits DCI to a UE) in an M-TRP situation (or cell, hereinafter all TRPs can be replaced by cells, or even when multiple CORESETs are configured from one TRP, it can be assumed to be M-TRP).

Although not shown in FIG. 15, a UE may receive configuration information for transmission and reception based on multiple TRPs through/using TRP 1 (and/or TRP 2) from a network.

The configuration information may include information related to network configuration (i.e., TRP configuration), resource allocation related to transmission and reception based on multiple TRPs, etc. Here, the configuration information may be transmitted through higher layer signaling (e.g., RRC signaling, MAC-CE, etc.). In addition, when the configuration information is pre-defined or pre-configured, the corresponding step may be omitted. For example, the configuration information may include a CORESET-related configuration information (e.g., ControlResourceSet IE) as described in the above methods. The CORESET-related configuration information may include a CORESET-related ID (e.g., controlResourceSetID), a CORESET pool index (e.g., CORESETPoolIndex) for a CORESET, a time/frequency resource configuration of a CORESET, and TCI information related to a CORESET. For example, the configuration information may include information related to beam management/BFR, etc., as described in the above methods. For example, the TCI information related to a CORESET may be information on one or a plurality of TCI state(s) for each CORESET.

For example, the configuration information may include information for reporting information related to panel switching, as described in the above-described proposed methods (e.g., Embodiments #1 and #2).

For example, for reporting information related to panel switching, the configuration information may include an SR ID dedicated to reporting information when an SR PUCCH is used, a preamble sequence index dedicated to reporting information when a PRACH is used, and an ID dedicated to reporting information when a PUCCH for a BFRQ is used.

In addition, when a report of information related to panel switching is transmitted through a reserved resource, the configuration information is configuration information on the reserved resource (e.g., periodic CSI PUCCH resource index, report quantity, etc.).

In addition, when reporting of information related to panel switching is reported together with beam reporting, the configuration information may include a mode and/or report quantity for supporting a corresponding report operation.

A UE equipped with multiple panels transmits information related to panel switching for multi-panels to a network through/using TRP 1 (and/or TRP 2) (S1501, S1502).

Here, information related to panel switching may include i) information on one or more panels preferred by a UE and ii) information on a delay time until uplink transmission is possible after switching from a current panel to one or more preferred panels.

Here, i) information on one or more preferred panels may include identifiers of one or more preferred panels or one or more reference signal identifiers corresponding to each of the one or more preferred panels.

In addition, ii) information on a delay time may include information indicating whether one or more preferred panels are activated. In addition, a delay time (e.g., the number of slots or symbols) of one or more preferred panels may be included in information on a delay time or may be derived by a base station. Here, based on deactivation of one or more preferred panels, a delay time of one or more preferred panels may include a time required for activation of one or more preferred panels. In addition, information on a delay time may further include information (validity information of a current panel) on whether uplink transmission through a current panel is possible before panel switching.

For example, the information on the delay time includes a bitmap indicating whether one or more preferred panels are activated and whether or not one or more preferred panels have a delay time, and delay time of one or more panels preferred based on a value of the bitmap may be included in information on a delay time. As another example, information on a delay time is composed of 1-bit indicating whether a preferred panel is activated, and based on a 1-bit value, a delay time of the one or more preferred panels may be derived by a base station.

In addition, information related to panel switching may include a power headroom and/or a maximum power value ($P_{cmax}$) usable by a UE for each panel. In this case, a base station may determine whether a current panel of a UE is available before a delay time (i.e., before switching to another panel and performing UL transmission) through a power headroom/$P_{cmax}$ for each panel.

Although not shown in FIG. 15, in order to transmit information related to panel switching to a network, a UE may first transmit a PUCCH for an SR, a PUCCH for a PRACH, or a PUCCH for a BFRQ dedicated to reporting information related to panel switching to a network. In addition, the UE may transmit information related to the panel switching to the network based on scheduling information subsequent to PUCCH or PRACH transmission.

Alternatively, although not shown in FIG. 15, information related to panel switching may be included in a beam report and transmitted to a network. In this case, the information related to panel switching may be included in a beam report within a beam management operation described above with reference to FIGS. 7 to 12 and transmitted. That is, a description/action/process according to FIGS. 7 to 12 may be integrated with FIG. 15.

A UE may receive DCI 1 through/using TRP 1 from a network (S1503). In addition, a UE may receive DCI 2 through/using TRP 2 from a network (S1504).

DCIs (e.g., DCI 1, DCI 2) may be transmitted through a control channel (e.g., PDCCH, etc.). For example, the control channel (e.g., PDCCH) may be repeatedly transmitted (i.e., the same DCI is transmitted) or the same control channel may be divided and transmitted. In addition, steps S1503 and S1504 may be performed simultaneously, or one may be performed earlier than the other.

In addition, only one of DCI 1 and DCI 2 may be transmitted. That is, any one of steps S1503 and S1504 may be omitted.

In addition, DCIs (e.g., DCI 1 and DCI 2) may include scheduling information for uplink transmission (i.e., PUSCH scheduling information). For example, DCIs (e.g., DCI 1 and DCI 2) may include a field for assigning time domain resources of a PUSCH (i.e., a 'Time domain resource assignment' field). This field value may provide a row index m+1 of a predetermined PUSCH resource allocation related table. Each row in the PUSCH resource allocation table may define a slot offset $K_2$, a start and length indicator (SLIV) (or, directly start symbol S and allocation length L), a PUSCH mapping type assumed for PUSCH transmission, and the number of repetitions. If a UE receives DCI scheduling a PUSCH in slot n, $K_2$ value is determined according to a row of the PUSCH resource allocation related table indicated by the 'Time domain resource assignment' field value m in corresponding DCI, a slot $K_s$ allocated for a PUSCH may be determined based on an index (i.e., n) of the slot in which the DCI is received and the value of $K_2$. However, according to the proposed method, a slot $K_s$ allocated for a PUSCH may be finally determined based on information on a delay time, and a detailed description thereof will be described later.

A UE may transmit Data 1 scheduled by DCI 1 (and/or DCI 2) through/using TRP 1 to a network (S1505). In addition, a UE may transmit Data 2 scheduled by DCI 2 (and/or DCI 1) through/using TRP 2 to a network (S1506).

Here, although FIG. 15 illustrates a case where data 1 and data 2 are transmitted to TRP 1 and TRP 2, respectively, it is not limited thereto, even when a UE transmits data to any one TRP, the proposed method of the present disclosure may be applied similarly.

Data (e.g., data 1, data 2) may be transmitted through a data channel (e.g., PUSCH, etc.).

Here, a transmission timing (e.g., slot or symbol) of a PUSCH may be determined based on the information on a delay time.

For example, as described above, a slot offset from a slot with a PDCCH to a slot with PUSCH transmission may be indicated by DCI. Here, a slot offset indicated by DCI may be determined/indicated to guarantee the preferred delay time of one or more panels reported by a UE.

In addition, ii) the preferred delay time of one or more panels reported by a UE is added i) a slot offset from a slot with a PDCCH to a slot with a PUSCH transmission determined/indicated by DCI, so a transmission timing of a PUSCH may be finally determined. That is, a network and a UE may apply a value obtained by adding a delay time of one or more preferred panels of a UE to a slot offset indicated by DCI as an actually applied slot offset between a PDCCH and a PUSCH.

In addition, the number of symbols (i.e., PDCCH processing time, $N_2$) required for processing of a UE from an end of reception of a PDCCH carrying DCI to the earliest possible start of transmission of a PUSCH may be determined based on the preferred delay time of one or more panels. That is, in order to reflect a delay time of a panel, a range of $N_2$ may be extended and configured. For example, when a value of $N_2$ is determined according to a processing capability of a UE, a value of $N_2$ may be determined to ensure a delay time of a panel.

FIG. 16 is a diagram illustrating an operation of a UE for a method for transmitting and receiving an uplink according to an embodiment of the present disclosure.

FIG. 16 illustrates an operation of a UE based on the Embodiment #1 to the Embodiment #2. An example in FIG. 16 is for convenience of a description, and it does not limit a scope of the present disclosure. Some step(s) illustrated in FIG. 16 may be omitted according to a situation and/or a configuration. In addition, in FIG. 16, a UE is just one example, and may be implemented by a device illustrated in the following FIG. 18. For example, a processor 102/202 in FIG. 16 may control to transmit and receive a channel/a signal/data/information, etc. by using a transceiver 106/206 and may also control to store a channel/a signal/data/information, etc. which will be transmitted or received in a memory 104/204.

In addition, an operation in FIG. 16 may be processed by one or more processors 102 and 202 in FIG. 18 and an operation in FIG. 16 may be stored in a memory (e.g., one or more memories (104, 204) in FIG. 18) in a form of a command/a program (e.g., an instruction, an executable code) for operating at least one processor (e.g., 102, 202) in FIG. 18.

Although not shown in FIG. 16, a UE may receive configuration information from a base station.

Here, configuration information may include information for reporting information related to panel switching, as described in the above-described proposed methods (e.g., Embodiments #1 and #2).

For example, for reporting information related to panel switching, the configuration information may include an SR ID dedicated to reporting information when an SR PUCCH is used, a preamble sequence index dedicated to reporting information when a PRACH is used, and an ID dedicated to reporting information when a PUCCH for a BFRQ is used.

In addition, when a report of information related to panel switching is transmitted through a reserved resource, the configuration information is configuration information on the reserved resource (e.g., periodic CSI PUCCH resource index, report quantity, etc.).

In addition, when reporting of information related to panel switching is reported together with beam reporting, the configuration information may include a mode and/or report quantity for supporting a corresponding report operation.

A UE equipped with multiple panels transmits information related to panel switching for multi-panels to a base station (S1601).

Here, information related to panel switching may include i) information on one or more panels preferred by a UE and ii) information on a delay time until uplink transmission is possible after switching from a current panel to one or more preferred panels.

Here, i) information on one or more preferred panels may include identifiers of one or more preferred panels or one or more reference signal identifiers corresponding to each of the one or more preferred panels.

In addition, ii) information on a delay time may include information indicating whether one or more preferred panels are activated. In addition, a delay time (e.g., the number of slots or symbols) of one or more preferred panels may be included in information on a delay time or may be derived by a base station. Here, based on deactivation of one or more preferred panels, a delay time of one or more preferred panels may include a time required for activation of one or more preferred panels. In addition, information on a delay time may further include information (validity information of a current panel) on whether uplink transmission through a current panel is possible before panel switching.

For example, the information on the delay time includes a bitmap indicating whether one or more preferred panels are activated and whether or not one or more preferred panels have a delay time, and delay time of one or more panels preferred based on a value of the bitmap may be included in information on a delay time. As another example, information on a delay time is composed of 1-bit indicating whether a preferred panel is activated, and based on a 1-bit value, a delay time of the one or more preferred panels may be derived by a base station.

In addition, information related to panel switching may include a power headroom and/or a maximum power value ($P_{cmax}$) usable by a UE for each panel. In this case, a base station may determine whether a current panel of a UE is available before a delay time (i.e., before switching to another panel and performing UL transmission) through a power headroom/$P_{cmax}$ for each panel.

Although not shown in FIG. 16, in order to transmit information related to panel switching to a base station, a UE may first transmit a PUCCH for an SR, a PUCCH for a PRACH, or a PUCCH for a BFRQ dedicated to reporting information related to panel switching, to a base station. In addition, the UE may transmit information related to the panel switching to the base station based on scheduling information subsequent to PUCCH or PRACH transmission.

Alternatively, although not shown in FIG. 16, information related to panel switching may be included in a beam report and transmitted to a base station. In this case, the information related to panel switching may be included in a beam report within a beam management operation described above with reference to FIGS. 7 to 12 and transmitted. That is, a description/action/process according to FIGS. 7 to 12 may be integrated with FIG. 16.

A UE receives DCI for scheduling a PUSCH from a base station (S1602).

Here, DCI may be transmitted through a control channel (e.g., PDCCH, etc.).

In addition, DCI may include scheduling information for uplink transmission (i.e., PUSCH scheduling information). For example, DCI may include a field for assigning time domain resources of a PUSCH (i.e., a 'Time domain resource assignment' field). This field value may provide a row index m+1 of a predetermined PUSCH resource allocation related table. Each row in the PUSCH resource allocation table may define a slot offset $K_2$, a start and length indicator (SLIV) (or, directly start symbol S and allocation length L), a PUSCH mapping type assumed for PUSCH transmission, and the number of repetitions. If a UE receives DCI scheduling a PUSCH in slot n, $K_2$ value is determined according to a row of the PUSCH resource allocation related table indicated by the 'Time domain resource assignment' field value m in corresponding DCI, a slot $K_s$ allocated for a PUSCH may be determined based on an index (i.e., n) of the slot in which the DCI is received and the value of $K_2$. However, according to the proposed method, a slot $K_s$ allocated for a PUSCH may be finally determined based on information on a delay time, and a detailed description thereof will be described later.

A UE transmits a PUSCH (i.e., data) to base station based on DCI (S1603).

Here, a transmission timing (e.g., slot or symbol) of a PUSCH may be determined based on the information on a delay time.

For example, as described above, a slot offset from a slot with a PDCCH to a slot with PUSCH transmission may be indicated by DCI. Here, a slot offset indicated by DCI may be determined/indicated to guarantee the preferred delay time of one or more panels reported by a UE.

In addition, ii) the preferred delay time of one or more panels reported by a UE is added i) a slot offset from a slot with a PDCCH to a slot with a PUSCH transmission determined/indicated by DCI, so a transmission timing of a PUSCH may be finally determined. That is, a network and a UE may apply a value obtained by adding a delay time of one or more preferred panels of a UE to a slot offset indicated by DCI as an actually applied slot offset between a PDCCH and a PUSCH.

In addition, the number of symbols (i.e., PDCCH processing time, $N_2$) required for processing of a UE from an end of reception of a PDCCH carrying DCI to the earliest possible start of transmission of a PUSCH may be determined based on the preferred delay time of one or more panels. That is, in order to reflect a delay time of a panel, a range of $N_2$ may be extended and configured. For example, when a value of $N_2$ is determined according to a processing capability of a UE, a value of $N_2$ may be determined to ensure a delay time of a panel.

FIG. 17 is a diagram illustrating an operation of a base station for a method for transmitting and receiving an uplink according to an embodiment of the present disclosure.

FIG. 16 illustrates an operation of a base station based on the Embodiment #1 to the Embodiment #2. An example in FIG. 16 is for convenience of a description, and it does not limit a scope of the present disclosure. Some step(s) illustrated in FIG. 16 may be omitted according to a situation and/or a configuration. In addition, in FIG. 16, a base station is just one example, and may be implemented by a device illustrated in the following FIG. 18. For example, a processor 102/202 in FIG. 17 may control to transmit and receive a channel/a signal/data/information, etc. by using a transceiver 106/206 and may also control to store a channel/a signal/data/information, etc. which will be transmitted or received in a memory 104/204.

In addition, an operation in FIG. 17 may be processed by one or more processors 102 and 202 in FIG. 18 and an operation in FIG. 17 may be stored in a memory (e.g., one or more memories (104, 204) in FIG. 18) in a form of a command/a program (e.g., an instruction, an executable code) for operating at least one processor (e.g., 102, 202) in FIG. 19.

Although not shown in FIG. 17, a base station may transmit configuration information to a UE.

Here, configuration information may include information for reporting information related to panel switching, as described in the above-described proposed methods (e.g., Embodiments #1 and #2).

For example, for reporting information related to panel switching, the configuration information may include an SR ID dedicated to reporting information when an SR PUCCH is used, a preamble sequence index dedicated to reporting information when a PRACH is used, and an ID dedicated to reporting information when a PUCCH for a BFRQ is used.

In addition, when a report of information related to panel switching is transmitted through a reserved resource, the configuration information is configuration information on the reserved resource (e.g., periodic CSI PUCCH resource index, report quantity, etc.).

In addition, when reporting of information related to panel switching is reported together with beam reporting, the configuration information may include a mode and/or report quantity for supporting a corresponding report operation.

A base station receives information related to panel switching for multi-panels from a UE equipped with multiple panels (S1701).

Here, information related to panel switching may include i) information on one or more panels preferred by a UE and ii) information on a delay time until uplink transmission is possible after switching from a current panel to one or more preferred panels.

Here, i) information on one or more preferred panels may include identifiers of one or more preferred panels or one or more reference signal identifiers corresponding to each of the one or more preferred panels.

In addition, ii) information on a delay time may include information indicating whether one or more preferred panels are activated. In addition, a delay time (e.g., the number of slots or symbols) of one or more preferred panels may be included in information on a delay time or may be derived by a base station. Here, based on deactivation of one or more preferred panels, a delay time of one or more preferred panels may include a time required for activation of one or more preferred panels. In addition, information on a delay time may further include information (validity information of a current panel) on whether uplink transmission through a current panel is possible before panel switching.

For example, the information on the delay time includes a bitmap indicating whether one or more preferred panels are activated and whether or not one or more preferred panels have a delay time, and delay time of one or more panels preferred based on a value of the bitmap may be included in information on a delay time. As another example, information on a delay time is composed of 1-bit indicating whether a preferred panel is activated, and based on a 1-bit value, a delay time of the one or more preferred panels may be derived by a base station.

In addition, information related to panel switching may include a power headroom and/or a maximum power value ($P_{cmax}$) usable by a UE for each panel. In this case, a base station may determine whether a current panel of a UE is available before a delay time (i.e., before switching to another panel and performing UL transmission) through a power headroom/$P_{cmax}$ for each panel.

Although not shown in FIG. 17, in order to receive information related to panel switching, a base station may first receive a PUCCH for an SR, a PUCCH for a PRACH, or a PUCCH for a BFRQ dedicated to reporting information related to panel switching, from a UE. In addition, the base station may transmit scheduling information subsequent to PUCCH or PRACH transmission to the UE in order to receive the information related to panel switching, and may receive the information related to panel switching based on the scheduling information from the UE.

Alternatively, although not shown in FIG. 17, information related to panel switching may be included in a beam report and transmitted to a base station. In this case, the information related to panel switching may be included in a beam report within a beam management operation described above with reference to FIGS. 7 to 12 and transmitted. That is, a description/action/process according to FIGS. 7 to 12 may be integrated with FIG. 17.

A base station transmits DCI for scheduling a PUSCH to a UE (S1702).

Here, DCI may be transmitted through a control channel (e.g., PDCCH, etc.).

In addition, DCI may include scheduling information for uplink transmission (i.e., PUSCH scheduling information). For example, DCI may include a field for assigning time domain resources of a PUSCH (i.e., a 'Time domain resource assignment' field). This field value may provide a row index m+1 of a predetermined PUSCH resource allocation related table. Each row in the PUSCH resource allocation table may define a slot offset $K_2$, a start and length indicator (SLIV) (or, directly start symbol S and allocation length L), a PUSCH mapping type assumed for PUSCH transmission, and the number of repetitions. If a UE receives DCI scheduling a PUSCH in slot n, $K_2$ value is determined according to a row of the PUSCH resource allocation related table indicated by the 'Time domain resource assignment' field value m in corresponding DCI, a slot $K_s$ allocated for a PUSCH may be determined based on an index (i.e., n) of the slot in which the DCI is received and the value of $K_2$. However, according to the proposed method, a slot $K_s$ allocated for a PUSCH may be finally determined based on information on a delay time, and a detailed description thereof will be described later.

A base station receives a PUSCH (i.e., data) based on DCI from a UE (S1703).

Here, a transmission timing (e.g., slot or symbol) of a PUSCH may be determined based on the information on a delay time.

For example, as described above, a slot offset from a slot with a PDCCH to a slot with PUSCH transmission may be indicated by DCI. Here, a slot offset indicated by DCI may be determined/indicated to guarantee the preferred delay time of one or more panels reported by a UE.

In addition, ii) the preferred delay time of one or more panels reported by a UE is added i) a slot offset from a slot with a PDCCH to a slot with a PUSCH transmission determined/indicated by DCI, so a transmission timing of a PUSCH may be finally determined. That is, a network and a UE may apply a value obtained by adding a delay time of one or more preferred panels of a UE to a slot offset indicated by DCI as an actually applied slot offset between a PDCCH and a PUSCH.

In addition, the number of symbols (i.e., PDCCH processing time, $N_2$) required for processing of a UE from an end of reception of a PDCCH carrying DCI to the earliest possible start of transmission of a PUSCH may be determined based on the preferred delay time of one or more panels. That is, in order to reflect a delay time of a panel, a range of $N_2$ may be extended and configured. For example, when a value of $N_2$ is determined according to a processing capability of a UE, a value of $N_2$ may be determined to ensure a delay time of a panel.

General Device to which the Present Disclosure may be applied

FIG. 18 is a diagram which illustrates a block diagram of a wireless communication device according to an embodiment of the present disclosure.

In reference to FIG. 18, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of transmitting a physical uplink shared channel (PUSCH) in a wireless communication system, the method performed by a user equipment (UE) equipped with multi-panels comprising:

   transmitting, to a base station, information related to panel switching for the multi-panels;
   receiving, from the base station, downlink control information (DCI) for scheduling the PUSCH; and
   transmitting, to the base station, the PUSCH based on the DCI,
   wherein the information related to panel switching includes information on one or more preferred panels by the UE and information on a delay time until uplink transmission is possible by switching from a current panel to the one or more preferred panels, and
   wherein a transmission timing of the PUSCH is determined based on the information on the delay time.

2. The method of claim 1, wherein the information on the delay time includes information indicating whether the one or more preferred panels are activated, and
   wherein delay time of the one or more preferred panels is included in the information on the delay time or derived by the base station.

3. The method of claim 2, wherein the information on the delay time includes a bitmap indicating whether the one or more preferred panels are activated and whether a delay time of the one or more preferred panels exists, and

wherein the delay time of the one or more preferred panels is included in the information on the delay time based on a value of the bitmap.

4. The method of claim 2, wherein the information on the delay time is composed of 1-bit indicating whether the preferred panel is activated, and
wherein the delay time of the one or more preferred panels is derived by the base station based on a value of the 1-bit value.

5. The method of claim 2, wherein based on deactivation of the one or more preferred panels, the delay time of the one or more preferred panels includes a time for activation of the one or more preferred panels.

6. The method of claim 2, wherein the information on the one or more preferred panels includes identifiers of the one or more preferred panels or one or more reference signal identifiers corresponding to each of the one or more preferred panels.

7. The method of claim 2, wherein a slot offset from a slot with a physical downlink control channel (PDCCH) carrying the DCI to a slot with transmission of the PUSCH is determined by the DCI to ensure the delay time of the one or more preferred panels.

8. The method of claim 2, wherein the transmission timing of the PUSCH is determined by adding the delay time of the one or more preferred panels to a slot offset from a slot with a PDCCH carrying the DCI to a slot with transmission of the PUSCH determined by the DCI.

9. The method of claim 2, wherein a number of symbols required for processing of the UE from an end of reception of a PDCCH carrying the DCI to an earliest possible start of transmission of the PUSCH is determined based on the delay time of the one or more preferred panels.

10. The method of claim 2, wherein the information on the delay time further includes information on whether uplink transmission is possible through the current panel before panel switching.

11. The method of claim 1, further comprising:

    transmitting, to the base station, a PUCCH for a scheduling request (SR) dedicated to reporting the information related to panel switching or a PUCCH for a physical random access channel (PRACH) or a beam failure recovery request (BFRQ),
    wherein the information related to panel switching is transmitted based on subsequent scheduling information by the base station.

12. The method of claim 1, wherein the information related to panel switching is included in a beam report and transmitted to the base station.

13. The method of claim 1, wherein the information related to panel switching includes a power headroom for each panel and/or a maximum power value usable by the UE.

14. A user equipment (UE) equipped with multi-panels of transmitting a physical uplink shared channel (PUSCH) in a wireless communication system, the UE comprising:

    at least one transceiver for transmitting and receiving a wireless signal; and
    at least one processor for controlling the at least one transceiver,
    wherein the at least one processor configured to:

        transmit, to a base station, information related to panel switching for the multi-panels;
        receive, from the base station, downlink control information (DCI) for scheduling the PUSCH; and
        transmit, to the base station, the PUSCH based on the DCI,
        wherein the information related to panel switching includes information on one or more preferred panels by the UE and information on a delay time until uplink transmission is possible by switching from a current panel to the one or more preferred panels, and
        wherein a transmission timing of the PUSCH is determined based on the information on the delay time.

**15.** At least one non-transitory computer-readable medium storing at least one instruction, wherein the at least one instruction executable by at least one processor controls a user equipment (UE) equipped with multi-panels of transmitting a physical uplink shared channel (PUSCH) to:

transmit, to a base station, information related to panel switching for the multi-panels;
receive, from the base station, downlink control information (DCI) for scheduling the PUSCH; and
transmit, to the base station, the PUSCH based on the DCI,
wherein the information related to panel switching includes information on one or more preferred panels by the UE and information on a delay time until uplink transmission is possible by switching from a current panel to the one or more preferred panels, and
wherein a transmission timing of the PUSCH is determined based on the information on the delay time.

**16.** A processing apparatus configured to control a user equipment (UE) equipped with multi-panels of transmitting a physical uplink shared channel (PUSCH) in a wireless communication system, the processing apparatus comprising:

at least one processor; and
at least one computer memory operably connected to the at least one processor and storing instructions that, based on being executed by the at least one processor, perform operations comprising:

transmitting, to a base station, information related to panel switching for the multi-panels;
receiving, from the base station, downlink control information (DCI) for scheduling the PUSCH; and
transmitting, to the base station, the PUSCH based on the DCI,
wherein the information related to panel switching includes information on one or more preferred panels by the terminal and information on a delay time until uplink transmission is possible by switching from a current panel to the one or more preferred panels, and
wherein a transmission timing of the PUSCH is determined based on the information on the delay time.

**17.** A method of receiving a physical uplink shared channel (PUSCH) in a wireless communication system, the method performed by a base station comprising:

receiving, from a user equipment (UE) equipped with multi-panels, information related to panel switching for the multi-panels;
transmitting, to the UE, downlink control information (DCI) for scheduling the PUSCH; and
receiving, from the UE, the PUSCH based on the DCI,
wherein the information related to panel switching includes information on one or more preferred panels by the UE and information on a delay time until uplink transmission is possible by switching from a current panel to the one or more preferred panels, and
wherein a transmission timing of the PUSCH is determined based on the information on the delay time.

**18.** A base station of receiving a physical uplink shared channel (PUSCH) in a wireless communication system, the base station comprising:

at least one transceiver for transmitting and receiving a wireless signal; and
at least one processor for controlling the at least one transceiver,
wherein the at least one processor configured to:

receive, from a user equipment (UE) equipped with multi-panels, information related to panel switching for the multi-panels;
transmit, to the UE, downlink control information (DCI) for scheduling the PUSCH; and
receive, from the UE, the PUSCH based on the DCI,
wherein the information related to panel switching includes information on one or more preferred panels by the UE and information on a delay time until uplink transmission is possible by switching from a current panel to the one or more preferred panels, and
wherein a transmission timing of the PUSCH is determined based on the information on the delay time.

FIG.1

FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k,\bar{l})$
- In a resource block, $(k,l)$

$N_{RB}^{\mu} N_{SC}^{RB} - 1$ Subcarrier

$N_{SC}^{RB}$ Subcarrier

$k = 0$

$l = 0$      $l = 14 \cdot 2^{\mu} - 1$

FIG.4

FIG.5

FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601        S602        S603    S604        S605        S606        S607        S608

· DL/UL ACK/NACK
· UE CQI/PMI RI REPORT
  USING PUSCH AND PUCCH

FIG.7

FIG.8

Terminal                                              Base station

CSI-Resourceconfig IE          S410
(CSI-SSB-ResourceSetList)

SSB resource                   S420

Beam report (best SSBRI and L1-RSRP)   S430

FIG.9

Repetition
"on"

(a)

Repetition
"off"

Resource #0
Resource #0
Resource #0

CRI feedback

(b)

FIG.10

Terminal                                                    Base station

S610
NZP CSI-RS resource set IE

S620
Receive CSI resource(s) configured with
repetition 'ON' through same Tx beam

S630 — Determine Rx beam

S640
Omit CSI report (No report)

FIG.11

Terminal                                              Base station

                                                              S710
                    NZP CSI-RS resource set IE

              Receive CSI resource(s) configured with
        repetition 'OFF' through different Tx beam

                                                              S720

S730 —⟨ Determine best beam ⟩                                 S470

                    CSI report (CRI/L1-RSRP)

FIG.12

FIG.13

(a)

(b)

FIG.14

BFI                    BFI                    BFI

Pcell DL ─────┬──────────────┬──────────────┬──────────────────────────────────▶
              │              │              │
        cnt=1          cnt=2          cnt=cnt_max

                        BFR-RACH procedure initiation          Possible BFR-PRACH
                        -> Selection of new beam RS and        transmission timing
                        corresponding PRACH preamble

UE

Pcell UL ─────────────────────────┬────────────┬──────────────┬───────────────▶
(-TA value)                                  BFR-PRACH transmission

gNB Pcell ──────────────────────────────────────┴────────────────────────────▶

                              Confirmation of BF          Transmission of BFR
                            occurrence and new beam ID    response through DCI in
                                 (Acknowledge)            BFR-SS (Available for beam
                                                          reporting or serving beam
                                                          change request)

EP 4 277 151 A1

FIG.15

Network

TRP 2    TRP 1                                                    UE

Information related to panel switching ————S1501

————————————————————————————————————————— S1502

Downlink control information 1 ————S1503

Downlink control information 2 ————S1504

Data 1 ————S1505

Data 2 ————S1506

FIG.16

| Transmit information related to panel switching | ~S1601 |

↓

| Receive DCI scheduling a PUSCH | ~S1602 |

↓

| Transmit a PUSCH | ~S1603 |

FIG.17

| Receive information related to panel switching | ~S1701 |

↓

| Transmit DCI scheduling a PUSCH | ~S1702 |

↓

| Receive a PUSCH | ~S1703 |

FIG.18

## INTERNATIONAL SEARCH REPORT

| International application No. |
|---|
| **PCT/KR2022/000049** |

**A.    CLASSIFICATION OF SUBJECT MATTER**

**H04B 7/06**(2006.01)i; **H04B 7/0404**(2017.01)i; **H04B 17/318**(2014.01)i; **H04W 52/02**(2009.01)i; **H04W 52/36**(2009.01)i; **H04W 52/42**(2009.01)i

According to International Patent Classification (IPC) or to both national classification and IPC

**B.    FIELDS SEARCHED**

Minimum documentation searched (classification system followed by classification symbols)

H04B 7/06(2006.01); H01Q 1/24(2006.01); H04B 17/309(2014.01); H04B 7/08(2006.01); H04W 24/08(2009.01); H04W 48/20(2009.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH(physical uplink shared channel), 패널(panel), 스위칭(switching), 지연 시간(latency time), 전송 타이밍(transmission timing)

**C.    DOCUMENTS CONSIDERED TO BE RELEVANT**

| Category* | Citation of document, with indication, where appropriate, of the relevant passages | Relevant to claim No. |
|---|---|---|
| X | US 2019-0260456 A1 (QUALCOMM INCORPORATED) 22 August 2019 (2019-08-22)<br>See paragraphs [0070], [0074], [0078] and [0083]-[0086]. | 1-9,14-18 |
| Y | | 10-13 |
| Y | US 2020-0106168 A1 (NOKIA TECHNOLOGIES OY) 02 April 2020 (2020-04-02)<br>See paragraphs [0035]-[0036], [0040]-[0044] and [0057]. | 10-13 |
| A | US 2020-0029274 A1 (FG INNOVATION COMPANY LIMITED) 23 January 2020 (2020-01-23)<br>See paragraphs [0053]-[0193]; and figures 1-23. | 1-18 |
| A | US 2020-0244340 A1 (QUALCOMM INCORPORATED) 30 July 2020 (2020-07-30)<br>See paragraphs [0084]-[0097]; and figures 7-15. | 1-18 |
| A | WO 2020-198993 A1 (ZTE CORPORATION) 08 October 2020 (2020-10-08)<br>See pages 13-34. | 1-18 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 April 2022** | **22 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

International application No.

**PCT/KR2022/000049**

| Patent document cited in search report | | | Publication date (day/month/year) | Patent family member(s) | | | Publication date (day/month/year) |
|---|---|---|---|---|---|---|---|
| US | 2019-0260456 | A1 | 22 August 2019 | AU | 2019-221559 | A1 | 13 August 2020 |
| | | | | BR | 112020016398 | A2 | 15 December 2020 |
| | | | | CN | 111713040 | A | 25 September 2020 |
| | | | | EP | 3753133 | A1 | 23 December 2020 |
| | | | | JP | 2021-514154 | A | 03 June 2021 |
| | | | | KR | 10-2020-0118809 | A | 16 October 2020 |
| | | | | SG | 11202006793 | A | 28 August 2020 |
| | | | | TW | 201937950 | A | 16 September 2019 |
| | | | | US | 11088750 | B2 | 10 August 2021 |
| | | | | WO | 2019-161008 | A1 | 22 August 2019 |
| US | 2020-0106168 | A1 | 02 April 2020 | WO | 2020-064267 | A1 | 02 April 2020 |
| US | 2020-0029274 | A1 | 23 January 2020 | CN | 112425198 | A | 26 February 2021 |
| | | | | EP | 3824562 | A1 | 26 May 2021 |
| | | | | US | 10972972 | B2 | 06 April 2021 |
| | | | | WO | 2020-015614 | A1 | 23 January 2020 |
| US | 2020-0244340 | A1 | 30 July 2020 | CN | 111742503 | A | 02 October 2020 |
| | | | | EP | 3756282 | A1 | 30 December 2020 |
| | | | | US | 10873386 | B2 | 22 December 2020 |
| | | | | US | 10879991 | B2 | 29 December 2020 |
| | | | | US | 2019-0260458 | A1 | 22 August 2019 |
| | | | | WO | 2019-164643 | A1 | 29 August 2019 |
| WO | 2020-198993 | A1 | 08 October 2020 | CA | 3135038 | A1 | 08 October 2020 |
| | | | | CN | 113632393 | A | 09 November 2021 |
| | | | | KR | 10-2021-0145217 | A | 01 December 2021 |
| | | | | US | 2022-0022215 | A1 | 20 January 2022 |

Form PCT/ISA/210 (patent family annex) (July 2019)